# EUROPEAN PATENT APPLICATION

(11) **EP 4 428 200 A1**
(43) Date of publication of application: **11.09.2024**
(21) Application number: 22889786.4
(22) Date of filing: 20.10.2022
(51) Int. Cl.: C08L 101/12, C08K 5/17, C08L 63/00

(54) **CROSSLINKABLE RESIN COMPOSITION AND CURED ARTICLE**

(30) Priority: 04.11.2021 JP 2021180317
(71) Applicant: DIC Corporation, Tokyo 174-8520 (JP)
(72) Inventor: ARITA, Kazuo, Sakura-shi, Chiba 285-8668 (JP); OTSU, Masato, Sakura-shi, Chiba 285-8668 (JP); ASANO, Yu, Sakura-shi, Chiba 285-8668 (JP); SUZUKI, Etsuko, Sakura-shi, Chiba 285-8668 (JP)
(74) Representative: TBK
(86) International application number: PCT/JP2022/039037
(87) International publication number: WO 2023/079966

(57) **Abstract**

An object is to provide a crosslinkable resin composition having mechanical strength and capable of exhibiting flexibility, repairability, and remoldability in a low-temperature region including room temperature and contributing to prolongation of the life of the cured product itself and a decrease in waste. Specifically, used is a crosslinkable resin composition which can form a cured product having a phase-separated structure formed of a continuous phase and a discontinuous phase and in which the discontinuous phase has higher tensile elastic modulus than the continuous phase, and the continuous phase containing a reversible bond. In particular, in the crosslinkable resin composition, preferably, the continuous phase contains the reaction product of a resin component A containing the reversible bond with a curing agent, the discontinuous phase contains the reaction product of a resin component B with the curing agent, and the phase-separated structure contains the reaction product of the continuous phase and the discontinuous phase with the curing agent.

## Description

### Technical Field

The present invention relates to a crosslinkable resin composition and a cured product produced by the crosslinkable resin composition.

### Background Art

A cured product produced from an epoxy resin has excellent heat resistance, mechanical strength, electrical characteristics, adhesin, etc., and thus is an essential material in various fields of electric/electronic, coating materials, adhesives, and the like.

On the other hand, a cured product using a thermosetting resin such as an epoxy resin or the like has, for example, low long-term reliability, and, for example, cracks may occur due to oxidative deterioration of the epoxy resin.

Also, a cured product obtained by curing once a thermosetting resin such as an epoxy resin or the like cannot be dissolved in a solvent (insoluble) and is not melted even at a high temperature (infusible), and thus the cured product after use becomes waste because of poor recyclability and reusability and thus the problem is to realize a decrease in waste and a decrease in environmental load.

Therefore, the cured product using an epoxy resin or the like is required to solve the problem to prolong the life and decrease waste, and in order to solve the problem, it is considered effective to impart repairability and remoldability to the cured product.

For example, for cracks generated in a general resin cured product, Patent Literature 1 discloses a method for enabling self-repairing using a fiber-reinforced plastic in which a plurality of capsules, containing an unsolidified adhesive sealed therein, are embedded.

In addition, Patent Literature 2 discloses a sealing material capable of self-repairing even when cracks or peeling occurs, in which microcapsule particles including a first thermosetting resin and a second thermosetting resin precursor are used in a sealing material using an epoxy resin or the like.

### Citation List

### Patent Literature

PTL 1: Japanese Unexamined Patent Application Publication No. 8-52810
PTL 2: Japanese Unexamined Patent Application Publication No. 2017-41493

### Summary of Invention

### Technical Problem

In order to impart the repairability/remoldability, research is actively performed by using a reversible bond such as a dynamic covalent bond, a supermolecular bond, or the like in a cured product. However, the raw material used and involved in the reversible bond is required to secure its molecular mobility and thus has a problem that the used raw material is limited to a gel-like material having poor mechanical strength. Accordingly, a problem to be solved by the present invention is to provide a crosslinkable resin composition having mechanical strength and capable of exhibiting flexibility, repairability, and remoldability in a low-temperature region including room temperature and contributing to prolongation of the life of the cured product itself and a decrease in waste.

### Solution to Problem

As a result of repeated earnest investigation for solving the problem, the present inventors found that by using a crosslinkable resin composition which can form a cured product having a phase-separated structure formed by a continuous phase and a discontinuous phase having different tensile elastic moduli, the resultant cured product can exhibit mechanical strength and flexibility, repairability, and remoldability in a low-temperature region including room temperature, leading to the achievement of the present invention.

That is, the present invention has the following aspects.

[1] A crosslinkable resin composition which can form a cured product having a phase-separated structure formed by a continuous phase and a discontinuous phase, in which the discontinuous phase has higher tensile elastic modulus than the continuous phase, and the continuous phase contains a reversible bond.
[2] The crosslinkable resin composition described above in [1], in which the continuous phase contains the reaction product of resin component A containing the reversible bond with a curing agent;
   the discontinuous phase contains the reaction product of resin component B with a curing agent; and
   the phase-separated structure contains the reaction product of the continuous phase and the discontinuous phase with the curing agent.
[3] The crosslinkable resin composition described above in [1] or [2], in which the continuous phase contains the reaction product of the resin component A containing the reversible bond with a curing agent and/or the self-polymerization product of the resin component A containing the reversible bond;
   the discontinuous phase contains the reaction product of the resin component B with a curing agent and/or the self-polymerization product of the resin component B;
   a functional group (a1) in the continuous phase has reactivity with a functional group (b1) in the discontinuous phase; and
   the phase-separated structure contains the reaction product of the functional group (a1) in the continuous phase and the functional group (b1) in the discontinuous phase.
[4] The crosslinkable resin composition described above in any one of [1] to [3], in which the difference in tensile elastic modulus between the continuous phase and the discontinuous phase is 1000 MPa or more.
[5] The crosslinkable resin composition described above in any one of [1] to [4], in which the tensile elastic modulus of the continuous phase is less than 1000 MPa.
[6] The crosslinkable resin composition described above in any one of [1] to [5], in which the crosslinkable resin composition is a composition for a repairing/remolding material.
[7] A cured product produced by curing the crosslinkable resin composition described above in any one of [1] to [6] .
[8] A laminate including a substrate and a layer containing the cured product described above in [7].
[9] A heat-resistant member including the cured product described above in [7].

### Advantageous Effects of Invention

A crosslinkable resin composition of the present invention can form a cured product having a phase-separated structure formed by a continuous phase and a discontinuous phase, the discontinuous phase having higher tensile elastic modulus than the continuous phase, and the continuous phase containing a reversible bond. Thus, the mechanical strength of the whole of the cured product can be exhibited by the discontinuous phase having high elastic modulus. On the other hand, the reversible bond contained (introduced) in the continuous phase having low elastic modulus improves molecular mobility even in a low-temperature region including room temperature, thereby imparting flexibility. Therefore, the resin composition is useful because even when cracks occur in the cured product, it can exhibit repairability and remoldability and contribute to prolongation of the life of the cured product and a decrease in waste.

### Brief Description of Drawings

[Fig. 1] Fig. 1 is a SEM photograph of a cured product obtained in Example 1.
[Fig. 2] Fig. 2 is a GPC chart of the epoxy resin (Ep-1) obtained in Synthesis Example 2.
[Fig. 3] Fig. 3 is a ¹H-NMR spectrum of the epoxy resin (Ep-1) obtained in Synthesis Example 2.

### Description of Embodiments

### <Crosslinkable resin composition>

The present invention relates to a crosslinkable resin composition which can form a cured product having a phase-separated structure formed by a continuous phase and a discontinuous phase, in which
the discontinuous phase has higher tensile elastic modulus than the continuous phase; and
the continuous phase contains a reversible bond.

The cured product obtained by using the crosslinkable resin composition of the present invention has the phase-separated structure formed of the continuous phase (sea portion) and the discontinuous phase (island portion), and the continuous phase (sea portion) has lower tensile elastic modulus than the discontinuous phase (island portion). The phase-separated structure of the cured product is formed in association with the progress of curing of the crosslinkable resin composition.

Also, the crosslinkable resin composition is useful because it can form the cured product having the phase-separated structure formed by the continuous phase and the discontinuous phase, and consequently mechanical strength of the whole of the resultant cured product is improved by the discontinuous phase having high tensile elastic modulus. On the other hand, the continuous phase containing the reversible bond (introduced) has high molecular mobility and excellent flexibility and can exhibit these performances due to the reversible bond even in a low-temperature region (for example, 0 to 100°C) including room temperature (23°C). Therefore, repairability and remoldability can be exhibited for breakage such as cracks or the like of the cured product, and it is possible to contribute to the prolongation od the life of the cured product and a decrease in waste caused by the cured product.

For example, an embodiment described below can be used as the cured product obtained by using the crosslinkable resin composition of the present invention. In addition, interpretation of the present invention is not limited to the embodiment described below.

### (Embodiment 1)

In the crosslinkable resin composition of the present invention, preferably, the continuous phase contains the reaction product of the resin component A containing the reversible bond with the curing agent;
the discontinuous phase contains the reaction product of the resin component B with the curing agent; and
the phase-separated structure contains the reaction product of the continuous phase and the discontinuous phase with the curing agent.

In the embodiment described above, the reaction of the resin component A with the curing agent produces the reaction product (reaction product A), and the reaction product can form a structure serving as a base of the continuous phase (sea portion). Also, the reaction of the resin component B with the curing agent produces the reaction product (reaction product B), and the reaction product can form a structure serving as a base of the discontinuous phase (island portion). Further, the reaction (reaction at seal-island interface) of each of the reaction products with the curing agent can form the phase-separated structure (sea-island structure).

In addition, the resin component A and the resin component B have a structural difference (difference in functional group concentration) between the resin components, and thus has a difference in reactivity with the curing agent. Therefore, one of the resin component A and the resin component B has higher reactivity with the curing agent as compared with the other resin component and allows the reaction to easily proceed, and the resultant cured product can form the phase-separated structure.

### (Embodiment 2)

In the crosslinkable resin composition of the present invention, preferably, the continuous phase contains the reaction product of the resin component A containing the reversible bond with the curing agent and/or the self-polymerization product of the resin component A containing a reversible bond;
the discontinuous phase contains the reaction product of the resin component B with the curing agent and/or the self-polymerization product of the resin component B;
a functional group (a1) in the continuous phase has reactivity with a functional group (b1) in the discontinuous phase; and
the phase-separated structure contains the reaction product of the functional group (a1) in the continuous phase and the functional group (b1) in the discontinuous phase.

In the embodiment described above, reaction of the resin component A with the curing agent produces the reaction product (reaction product A) or self-polymerization of the resin component A alone (a curing accelerator may be used) produces the self-polymerization product, and the reaction product or the self-polymerization product can form a structure serving as a base of the continuous phase (sea portion).

Also, the reaction of the resin component B with the curing agent produces the reaction product (reaction product B) or self-polymerization of the resin component B alone (a curing accelerator may be used) produces a self-polymerization product, and the reaction product or the self-polymerization product can form a structure serving as a base of the discontinuous phase (island portion).

Further, the functional group (a1) in the continuous phase has reactivity with the functional group (b1) in the discontinuous phase, and the resultant cured product can form the phase-separated structure (sea-island structure) by reaction of the functional group (a1) in the continuous phase with the functional group (b1) in the discontinuous phase.

In addition, various phase-separated structures can be prepared by combining the functional groups having reactivity in the resin component A and the resin component B and can be used without particular limitation. Examples of the combination include combinations of an epoxy group and a phenolic hydroxyl group, an epoxy group and an amino group, an epoxy group and a carboxyl group, an epoxy group and an acid hydride group, an epoxy group and a thiol group, a maleimide group and a double bond (ene-reaction), thiol and a double bond, isocyanate and an alcoholic hydroxyl group, a carboxyl group and an alcoholic hydroxyl group, an amino group and a carboxyl group, a SiH group and a double bond (hydrosilylation), and the like, anionic polymerization of an epoxy group, cationic polymerization of an epoxy group, polymerization of maleimide, polymerization of an acryloyl group, hydrolytic polycondensation of alkoxysilane, and the like. Amend these, from the viewpoint of durability, an epoxy group and a phenolic hydroxyl group, an epoxy group and an amino group, and anionic polymerization of an epoxy group are preferred.

Specifically, the embodiment 2 includes embodiments (2-1) to (2-4) described below, but interpretation is not limited to the embodiments described below.

### (Embodiment 2-1)

In the crosslinkable resin composition of the present invention, the continuous phase may contain the reaction product of the resin component A containing a reversible bond with the curing agent;
the discontinuous phase may contain the reaction product of the resin component B with the curing agent;
the functional group (a1) in the continuous phase may have reactivity with the functional group (b1) in the discontinuous phase; and
the phase-separated structure may contain the reaction product of the functional group (a1) in the continuous phase and the functional group (b1) in the discontinuous phase.

### (Embodiment 2-2)

In the crosslinkable resin composition of the present invention, the continuous phase may contain the self-polymerization product of the resin component A containing a reversible bond;
the discontinuous phase may contain the self-polymerization product of the resin component B;
the functional group (a1) in the continuous phase may have reactivity with the functional group (b1) in the discontinuous phase; and
the phase-separated structure may contain the reaction product of the functional group (a1) in the continuous phase and the functional group (b1) in the discontinuous phase.

### (Embodiment 2-3)

In the crosslinkable resin composition of the present invention, the continuous phase may contain the reaction product of the resin component A containing a reversible bond with the curing agent;
the discontinuous phase may contain the self-polymerization product of the resin component B;
the functional group (a1) in the continuous phase may have reactivity with the functional group (b1) in the discontinuous phase; and
the phase-separated structure may contain the reaction product of the functional group (a1) in the continuous phase and the functional group (b1) in the discontinuous phase.

### (Embodiment 2-4)

In the crosslinkable resin composition of the present invention, the continuous phase may contain the self-polymerization product of the resin component A containing a reversible bond;
the discontinuous phase may contain the reaction product of the resin component B with the curing agent;
the functional group (a1) in the continuous phase may have reactivity with the functional group (b1) in the discontinuous phase; and
the phase-separated structure may contain the reaction product of the functional group (a1) in the continuous phase and the functional group (b1) in the discontinuous phase.

The present invention is characterized in that the continuous phase contains the reversible bond, and in order to form the continuous phase, for example, the reversible bond is preferably contained (introduced) in the resin component A. With respect to the resin component A containing the reversible bond, the reversible bond can be contained (introduced) in the resin component A by, for example, reacting a monomer component or polymer component (may be referred to as a "monomer component or the like" hereinafter) with a compound (may be referred to as a "compound C" hereinafter) having reactivity with the monomer component or the like and being capable of forming the reversible bond, and consequently the reversible bond can be contained (introduced) in the continuous phase.

A single or a plurality of compounds can be used as the compound C.

The method for causing the reversible bond to be contained (introduced) in the resin component A may include reacting the monomer component or the like with a plurality of other compounds (for example, a "compound C'" and a "compound C"") other than the monomer component or the like to form the reversible bond in the resin component A due to the plurality of other compounds.

When the resin component A is a polymer, the reversible bond may be formed in either a side chain or a main chain, and from the viewpoint of flexibility, the reversible bond is more preferably formed in a side chain, and from the viewpoint of heat resistance, the reversible bond is more preferably formed in a main chain. When the structure of the resin component A is the same or similar, from the viewpoint of repairability, the reversible bond is more preferably formed in a side chain, and from the viewpoint of remoldability, the reversible bond is more preferably formed in a main chain.

### <Resin component A and resin component B>

The resin component (or the resin composition) A which can form the continuous phase and the resin component (or the resin composition) B which can form the discontinuous phase can be properly selected according to the difference in tensile elastic modulus between the cured products of the respective resin components (or the resin compositions), the difference in reactivity with the compound C causing the reversible bond introduced in the continuous phase, the difference in reactivity between the monomer component or the like and the component C' and the component C", etc.

Examples of the resin component A and the resin component B include an epoxy resin (an epoxy compound), an acrylic resin (an acrylic polymer), a silicone-based resin (a silicone-based polymer), a urethane-based resin (a urethane-based polymer), a maleimide resin (a maleimide compound), a phenol resin, an unsaturated polyester resin, a melamine resin, a urea resin, a diallyl phthalate resin, a benzoxazine resin (polybenzoxazine), a cyanate ester resin, and the like.

Also, specific examples of combination of the resin component A and the resin component B include combination of an epoxy resin and another epoxy resin (having a difference in tensile elastic modulus between the cured products obtained by using the epoxy resins alone), combination of an epoxy resin and another resin (for example, an acrylic resin, a silicone-based resin, a urethane-based resin, or the like), and the like.

Specific resin components are described below.

### <Epoxy resin>

The use of an epoxy resin in the crosslinkable resin composition is useful because a cured product having excellent heat resistance, mechanical strength, adhesive strength, and electrical insulation can be obtained. In addition, a known usual method can be used as a metho for preparing the epoxy resin.

Examples of the epoxy resin include, but are not particularly limited to, novolac type epoxy resins such as a phenol novolac type epoxy resin, a cresol novolac type epoxy resin, a α-naphthol novolac type epoxy resin, a β-naphthol novolac type epoxy resin, a bisphenol A novolac type epoxy resin, a biphenyl novolac type epoxy resin, and the like; aralkyl type epoxy resins such as a phenol aralkyl type epoxy resin, a naphthol aralkyl type epoxy resin, a phenol biphenyl aralkyl type epoxy resin, and the like; bisphenol type epoxy resins such as a bisphenol A type epoxy resin, a bisphenol AP type epoxy resin, a bisphenol AF type epoxy resin, a bisphenol B type epoxy resin, a bisphenol BP type epoxy resin, a bisphenol C type epoxy resin, a bisphenol E type epoxy resin, a bisphenol F type epoxy resin, a bisphenol S type epoxy resin, a tetrabromobisphenol A type epoxy resin, and the like; biphenyl type epoxy resins such as a biphenyl type epoxy resin, a tetramethylbiphenyl type epoxy resin, an epoxy resin having a biphenyl skeleton and a diglycidyloxybenzene skeleton, and the like; a naphthalene type epoxy resin; a naphthylene ether type epoxy resin; a binaphthol type epoxy resin; a binaphthyl type epoxy resin; dicyclopentadiene type epoxy resins such as a dicyclopentadiene phenol type epoxy resin and the like; glycidylamine type epoxy resins such as a tetraglycidyl diaminodiphenylmethane type epoxy resin, a triglycidyl-p-aminophenol type epoxy resin, a diaminodiphenyl sulfone glycidylamine type epoxy resin, and the like; diglycidyl ester type epoxy resins such as a 2,6-naphthalenedicarboxylic acid diglycidyl ester type epoxy resin, a hexahydronaphthalic anhydride glycidyl ester type epoxy resin, and the like; benzopyrane type epoxy resins such as dibenzopyrane, hexamethyldibenzopyrane, 7-phenylhexamethyldibenzopyrane, and the like; epoxy resins having a flexible skeleton in which four or more atoms are linked in a linear form, such as a polyethylene glycol type epoxy resin, a polypropylene glycol type epoxy resin, a tetramethylene glycol type epoxy resin, a 1,4-butanediol type epoxy resin, a 1,6-hexanediol type epoxy resin, a 1,12-dodecanediol type epoxy resin, and the like; copolymerization type epoxy resins having a flexible skeleton in which four or more atoms are linked in a linear form and a rigid skeleton of bisphenol or the like; and the like. These may be used alone or in combination of two or more.

In addition, many commercial epoxy resins contain a high concentration of aromatic skeleton exemplified by benzene and naphthalene, and many cured products obtained by using such epoxy resins have high tensile elastic modulus. In particular, examples of epoxy resins which tend to produce a cured product having high tensile elastic modulus (for example, the tensile elastic modulus of a cured product is 1500 MPa or more) include novolac type epoxy resins such as a phenol novolac type epoxy resin, a cresol novolac type epoxy resin, a α-naphthol novolac type epoxy resin, a β-naphthol novolac type epoxy resin, a bisphenol A novolac type epoxy resin, a biphenyl novolac type epoxy resin, and the like; aralkyl type epoxy resins such as a phenol aralkyl type epoxy resin, a naphthol aralkyl type epoxy resin, a phenol biphenyl aralkyl type epoxy resin, and the like; bisphenol type epoxy resins such as a bisphenol A type epoxy resin, a bisphenol AP type epoxy resin, a bisphenol AF type epoxy resin, a bisphenol B type epoxy resin, a bisphenol BP type epoxy resin, a bisphenol C type epoxy resin, a bisphenol E type epoxy resin, a bisphenol F type epoxy resin, a bisphenol S type epoxy resin, a tetrabromobisphenol A type epoxy resin, and the like; biphenyl type epoxy resins such as a biphenyl type epoxy resin, a tetramethylbiphenyl type epoxy resin, an epoxy resin having a biphenyl skeleton and a diglycidyloxybenzene skeleton, and the like; a naphthalene type epoxy resin; a naphthylene ether type epoxy resin; a binaphthol type epoxy resin; a binaphthyl type epoxy resin; dicyclopentadiene type epoxy resins such as a dicyclopentadiene phenol type epoxy resin and the like; glycidylamine type epoxy resins such as a tetraglycidyl diaminodiphenylmethane type epoxy resin, a triglycidyl-p-aminophenol type epoxy resin, a diaminodiphenyl sulfone glycidylamine type epoxy resin, and the like; diglycidyl ester type epoxy resins such as a 2,6-naphthalenedicarboxylic acid diglycidyl ester type epoxy resin, a hexahydronaphthalic anhydride glycidyl ester type epoxy resin, and the like; benzopyrane type epoxy resins such as dibenzopyrane, hexamethyldibenzopyrane, 7-phenylhexamethyldibenzopyrane, and the like; and the like.

On the other hand, an epoxy resin having the tendency that the resultant epoxy resin has low tensile elastic modulus can be realized by adding or introducing a flexible aliphatic skeleton (including one containing a heteroatom) to a rigid aromatic skeleton or substituting an aromatic skeleton with an aliphatic skeleton. When an aliphatic skeleton is introduced in the skeleton of the epoxy resin, not only the molecular rigidity can be adjusted, but also the crosslinking density can be decreased by introducing the aliphatic skeleton in the side chain direction and the distance between the crosslink points in the resultant cured product can be extended by introducing the aliphatic skeleton in the main chain direction. Therefore, the effect of decreasing the elastic modulus in terms of the high-order structure of the cured product can be preferably exhibited.

Examples of the epoxy resins which produces a cured product having low elastic modulus (for example, a cured product having a tensile elastic modulus of less than 1000 MPa) include epoxy resins having a flexible skeleton in which four or more atoms are linked in a linear form, such as a polyethylene glycol type epoxy resin, a polypropylene glycol type epoxy resin, a tetramethylene glycol type epoxy resin, a 1,4-butanediol type epoxy resin, a 1,6-hexanediol type epoxy resin, a 1,12-dodecanediol type epoxy resin, and the like; copolymerization type epoxy resins having a flexible skeleton in which four or more atoms are linked in a linear form and a rigid skeleton of bisphenol or the like; and the like.

When the epoxy resin described above is used in the crosslinkable resin composition of the present invention, a curing accelerator may be contained. Usable examples of the curing accelerator include various ones such as a urea compound, a phosphorus-based compound, a tertiary amine, imidazole, an organic acid metal salt, a Lewis acid, an amine complex salt, a quaternary ammonium salt, a tin carboxylate salt, an organic peroxide, and the like. More specific usable examples include inorganic acids such as hydrochloric acid, sulfuric acid, phosphoric acid, and the like; organic acids such as p-toluene sulfonic acid, monoisopropyl phosphate, acetic acid, and the like; sodium hydroxide, potassium hydroxide, or the like; inorganic bases such as, titanate esters such as tetraisopropyl titanate, tetrabutyl titanate, and the like, and the like; compounds containing a basic nitrogen atom, such as 1,8-diazabicyclo[5.4.0]undecene-7 (DBU), 1,5-diazabicyclo[4.3.0]nonene-5 (DBN), 1,4-diazabicyclo[2.2.2]octane (DABCO), tri-n-butylamine, dimethylbenzylamine, monoethanolamine, imidazole, 2-ethyl-4-methyl-imidazole, 1-methylimidazole, N,N-dimethyl-4-aminopyridine (DMAP), and the like; urea compounds such as 3-(3,4-dichlorophenyl)-1,1-dimethylurea (DCMU) and the like; quaternary ammonium salts such as a tetramethyl ammonium salt, a tetrabutyl ammonium salt, a dilauryl dimethyl ammonium salt, and the like, the quaternary ammonium salts each having chloride, bromide, carboxylate, or hydroxide, or the like as a counter anion; tin carboxylate salts such as dibutyl tin diacetate, dibutyl tin dioctoate, dibutyl tin dilaurate, dibutyl tin diacetyl acetonate, tin octylate or tin stearate, and the like; organic peroxides such as benzoyl peroxide, cumene hydroperoxide, dicumyl peroxide, lauroyl peroxide, di-tert-butyl peroxide, tert-butyl hydroperoxide, methyl ethyl ketone peroxide, tert-butyl perbenzoate, and the like; and the like. The catalysts may be used alone or in combination of wo or more.

Also, when the epoxy resin described above is used in the crosslinkable resin composition of the present invention, curing can be performed by active energy rays. In this case, a photocationic polymerization initiator may be used as a polymerization initiator. In addition, visible light, ultraviolet light, X-rays, electron beams, or the like can be used as active energy rays.

Examples of the photocationic polymerization initiator include an aryl-sulfonium salt, an aryl-iodonium salt, and the like, and specific usable examples thereof include aryl sulfonium hexafluorophosphate, aryl sulfonium hexafluoroantimonate, aryl sulfonium tetrakis(pentafluoro) borate salt, tri(alkylphenyl)sulfonium hexafluorophosphate, and the like. These photocationic polymerization initiators may be used alone or in combination of two or more.

When the crosslinkable resin composition containing the epoxy resin is used for adhesive application, in view of excellent workability and low-temperature curability, a urea compound, particularly 3-(3,4-dichlorophenyl)-1,1-dimethylurea (DCMU) or the like, is preferred.

Also, when the crosslinkable resin composition containing the epoxy resin is used for semiconductor sealing material application or an electronic material such as a printed circuit board, a build-up substrate, or the like, in view of excellent curability, heat resistance, electrical characteristics, moisture-resistant reliability, and the like, triphenylphosphine as a phosphorus-based compound, dimethylaminopyridine and imidazoles as tertiary amines, 1,8-diazabicyclo-[5.4.0]-undecene (DBU), and benzyldimethylamine are preferred.

When the epoxy resin described above is used in the crosslinkable resin composition of the present invention, a curing agent may be contained. Various curing agents can be used as the cuing agent, and examples thereof include an amine-based compound, an acid anhydride-based compound, an amide-based compound, a phenol-based compound, a carboxylic acid-based compound, and the like.

Examples of the amine-based compound include aliphatic polyamines such as ethylenediamine, propylenediamine, butylenediamine, hexamethylenediamine, polypropylene glycol diamine, diethylene triamine, triethylene tetramine, pentaethylene hexamine, and the like; aromatic polyamines such as meta-xylylene diamine, diaminodiphenyl methane, diaminodiphenyl sulfone, phenylenediamine, and the like; alicyclic polyamines such as 1,3-bis(aminomethyl)cyclohexane, isophorone diamine, norbornane diamine, and the like; dicyandiamide; and the like.

Examples of the acid anhydride-based compound include phthalic anhydride, trimellitic anhydride, pyromellitic anhydride, maleic anhydride, maleic anhydride-polypropylene glycol, tetrahydrophthalic anhydride, methyltetrahydrophthalic anhydride, methylnadic anhydride, hexahydrophthalic anhydride, methylhexahydrophthalic anhydride, and the like.

Examples of the amide-based compound include an aliphatic polyamide synthesized from polycarboxylic acid and polyamine, an aromatic polyamide having an aromatic ring introduced in the aliphatic polyamide, an aliphatic polyamide adduct produced by adding an epoxy compound to polyamide, aromatic polyamide adduct, and the like.

Examples of the phenol-based compound include a phenol novolac resin, a cresol novolac resin, an aromatic hydrocarbon formaldehyde resin-modified phenol resin, a dicyclopentadiene phenol-added resin, a phenol aralkyl resin, a naphthol aralkyl resin, a trimethylolmethane resin, a tatraphenylolethane resin, a naphthol novolac resin, a naphthol-phenol cocondensed novolac resin, a naphthol-cresol cocondensed novolac resin, a biphenyl-modified phenol resin, an aminotriazine-modified phenol resin, modified products thereof, and the like. Also, examples of a latent catalyst include imidazole, a BF3-amine complex, guanidine derivatives, and the like.

Examples of the carboxylic acid-based compound include carboxylic acid polymers such as carboxylic acid-terminated polyester, polyacrylic acid, maleic acid-modified polypropylene glycol, and the like, and an active ester resin.

These curing agents can be used alone or in combination of two or more. The content of the curing agent can be properly determined according to purposes and is not limited to a specific range. In application to an underfill material or the like and application to a general coating material, the amine-based compound, the carboxylic acid-based compound, and/or the acid anhydride-based compound is preferably used. In application to an adhesive and a flexible wiring circuit board, the amine-based compound, particularly dicyandiamide, is preferred in view pf workability, durability, and long-term stability. Also, in application to a semiconductor sealing material, a solid-type phenol-based compound is preferred in view of the heat resistance of the cured product.

### <Acrylic resin (acrylic polymer) or the like>

The use of the acrylic resin (acrylic polymer) or the like in the crosslinkable resin composition, is useful because rapid curability can be imparted, and a cured product having excellent flexibility can be obtained. In addition, a known usual method can be used as a method for preparing the acrylic resin or the like, and examples thereof include the case using only monomers, the case using combination of a polymer, produced by polymerizing monomers, and a monomer, the case using a previously obtained polymer, and the like.

Examples of a monomer unit constituting the acrylic resin or the like include, but are not particularly limited to, glycidyl (meth)acrylate, glycidyl α-ethyl (meth)acrylate, glycidyl α-n-propyl (meth)acrylate, glycidyl α-n-butyl (meth)acrylate, 3,4-epoxybutyl (meth)acrylate, 4,5-epoxypentyl (meth)acrylate, 6,7-epoxypentyl (meth)acrylate, 6,7-epoxypentyl α-ethyl (meth)acrylate, β-methylglycidyl (meth)acrylate, 3,4-epoxycyclohexyl (meth)acrylate, 3,4-epoxycyclohexyl lactone-modified (meth)acrylate-, vinyl cyclohexene oxide;
(meth)acrylate esters having an alkyl group having 1 o 22 carbon atoms, such as methyl (meth)acrylate, ethyl (meth)acrylate, propyl (meth)acrylate, n-butyl (meth)acrylate, tert-butyl (meth)acrylate, hexyl (meth)acrylate, heptyl (meth)acrylate, octyl (meth)acrylate, nonyl (meth)acrylate, decyl (meth)acrylate, dodecyl (meth)acrylate, tetradecyl (meth)acrylate, hexadecyl (meth)acrylate, stearyl (meth)acrylate, octadecyl (meth)acrylate, docosyl (meth)acrylate, and the like;
(meth)acrylate esters having an alicyclic alkyl group, such as cyclohexyl (meth)acrylate, isobornyl (meth)acrylate, dicyclopentanyl (meth)acrylate, dicyclopentenyloxy ethyl (meth)acrylate, and the like;
(meth)acrylate esters having an aromatic ring, such as benzoyloxy ethyl (meth)acrylate, benzyl (meth)acrylate, phenylethyl (meth)acrylate, phenoxyethyl (meth)acrylate, phenoxy diethylene glycol (meth)acrylate, 2-hydeoxy-3-phenoxypropyl (meth)acrylate, and the like;
acrylate esters having a hydroxyalkyl group, such as hydroxyethyl (meth)acrylate;
hydroxypropyl (meth)acrylate, hydroxybutyl (meth)acrylate, glycerol (meth)acrylate; hydroxyethyl lactone-modified (meth)acrylate, (meth)acrylate esters having a polyalkylene glycol group, such as polyethylene glycol (meth)acrylate, polypropylene glycol (meth)acrylate, and the like, and the like;
unsaturated dicarboxylate esters such as dimethyl fumarate, diethyl fumarate, dibutyl fumarate, dimethyl itaconate, dibutyl itaconate, methyl ethyl fumarate, methyl butyl fumarate, methyl ethyl itaconate, and the like;
styrene derivatives such as styrene, α-methylstyrene, chlorostyrene, and the like;
diene-based compounds such as butadiene, isoprene, piperylene, dimethyl butadiene, and the like;
vinyl halides and vinylidene halides such as vinyl chloride, vinyl bromide, and the like;
unsaturated ketones such as methyl vinyl ketone, butyl vinyl ketone, and the like;
vinyl esters such as vinyl acetate, vinyl butyrate, and the like;
vinyl ethers such as methyl vinyl ether, butyl vinyl ether, and the like;
acrylonitrile, methacrylonitrile, vinyl cyanides such as vinylidene cyanide, and the like; acrylamide and alkyd-substituted amide thereof;
N-substituted maleimides such as N-phenyl maleimide, N-cyclohexyl maleimide, and the like;
fluorine-containing α-olefines such as vinyl fluoride, vinylidene fluoride, trifluoroethylene, chlorotrifluoroethylene, bromotrifluoroethylene, pentafluoropropylene, hexafluoropropylene, and the like;
(per)fluoroalkyl-perfluorovinyl ethers having a (per)fluoroalkyl group having a range of 1 to 18 carbon atoms, such as trifluoromethyl trifluorovinyl ether, pentafluoroethyl trifluorovinyl ether, heptafluoropropyl trifluorovinyl ether, and the like;
(per)fluoroalkyl (meth)acrylates having a (per)fluoroalkyl group having a range of 1 to 18 carbon atoms, such as 2,2,2-trifluoroethyl (methacrylate, 2,2,3,3-tetrafluoropropyl (meth)acrylate, 1H,1H,5H-octafluoropentyl (meth)acrylate, 1H,1H,2H,2H-heptadecafluorodecyl (meth)acrylate, perfluoroethyloxy ethyl (meth)acrylate, and the like;
silyl group-containing (meth)acrylates such as 3-methacryloxypropyl trimethoxysilane and the like;
N,N-dialkylaminoalkyl (meth)acrylates such as N,N-dimethylaminoethyl (meth)acrylate, N,N-diethylaminoethyl (meth)acrylate, N,N-diethylaminopropyl (meth)acrylate, and the like;
unsaturated carboxylic acids such as (meth)acrylic acid, (acryloyloxy)acetic acid, 2-carboxyethyl acrylate, 3-carbocypropyl acrylate, 1-[2-(acryloyloxy)ethyl] succinate, 1-(2-acryloyloxyethyl) phthalate, hydrogen 2-(acryloyloxy)ethyl hexahydrophthalate, lactone-modified products thereof, and the like; unsaturated dicarboxylic acids such as maleic acid and the like ;
carboxyl group-containing polyfunctional (meth)acrylates and the like obtained by reacting acid anhydride such as succinic anhydride, maleic anhydride, or the like with a hydroxyl group-containing polyfunctional (meth)acrylate monomer such as pentaerythritol triacrylate or the like;
aliphatic (meth)acrylate compounds such as 2-acryloyloxyethyl isocyanate, 2-methacryloyloxyethyl isocyanate, and 1,1-bis(acryloyloxymethyl)ethyl isocyanate; 2-hydroxyethyl acrylate, 2-hydroxypropyl acrylate, 4-hydroxybutyl acrylate, glycerin diacrylate, trimethylolpropane diacrylate, pentaerythritol triacrylate, dipentaerythritol pentaacrylate, and the like;
4-hydroxyphenyl acrylate, β-hydroxyphenethyl acrylate, 4-hydroxyphenethyl acrylate, 1-phenyl-2-hydroxyethyl acrylate, 3-hydroxy-4-acetylphenyl acrylate, 2-hydroxy-3-phenoxypropyl acrylate, and the like;
unsaturated monocarboxylic acids such as (meth)acrylic acid, (acryloyloxy)acetic acid, 2-carbocyethyl acrylate, 3-carboxypropyl acrylate, 1-[2-(acryloyloxy)ethyl] succinate, 1-(2-acryloyloxyethyl) phthalate, hydrogen 2-(acryloyloxy)ethyl hexahydrophthalate, lactone-modified products thereof, and the like; unsaturated dicarboxylic acids such as maleic acid and the like;
carboxyl group-containing polyfunctional (meth)acrylates obtained by reacting acid anhydride such as succinic anhydride, maleic anhydride, or the like with a hydroxyl group-containing polyfunctional (meth)acrylate monomer such as pentaerythritol triacrylate or the like;
glycidyl (meth)acrylate, glycidyl α-ethyl (meth)acrylate, glycidyl α-n-propyl (meth)acrylate, glycidyl α-n-butyl (meth)acrylate, 3,4-epoxybutyl (meth)acrylate, 4,5-epoxypentyl (meth)acrylate, 6,7-epoxypentyl (meth)acrylate, 6,7-epoxypentyl α-ethyl (meth)acrylate, β-methylglycidyl (meth)acrylate, 3,4-epoxycyclohexyl lactone-modified (meth)acrylate, 3,4-epoxycyclohexyl (meth)acrylate, vinyl cyclohexene oxide, and the like;
2-hydroxyethyl acrylate, 2-hydroxypropyl acrylate, 4-hydroxybutyl acrylate, 2,3-dihydroxypropyl acrylate, 2-hydroxyethyl methacrylate, 2-hydroxypropyl methacrylate, 4-hydroxybutyl methacrylate, 2,3-dihydroxypropyl methacrylate, and the like;
(meth)acrylates, for example, monofunctional (meth)acrylate monomers such as 2-hydroxyethyl (meth)acrylate, 2-hydroxypropyl (meth)acrylate, 2-hydroxybutyl (meth)acrylate, n-butyl (meth)acrylate, isobutyl (meth)acrylate, tert-butyl (meth)acrylate, glycidyl (meth)acrylate, acryloyl morpholine, N-vinylpyrrolidone, terahydrofurfuryl acrylate, cyclohexyl (meth)acrylate, 2-ethylhexyl (meth)acrylate, isobornyl (meth)acrylate, isodecyl (meth)acrylate, lauryl (meth)acrylate, tridecyl (meth)acrylate, cetyl (meth)acrylate, stearyl (meth)acrylate, benzyl (meth)acrylate, 2-ethoxyethyl (meth)acrylate, 3-methoxybutyl (meth)acrylate, ethylcarbitol (meth)acrylate, phosphoric acid (meth)acrylate, ethylene oxide-modified phosphoric acid (meth)acrylate, phenoxy (meth)acrylate, ethylene oxide-modified phenoxy (meth)acrylate, propylene oxide-modified phenoxy (meth)acrylate, nonylphenol (meth)acrylate, ethylene oxide-modified nonylphenol (meth)acrylate, propylene oxide-modified nonyl phenol (meth)acrylate, methoxydiethylene glycol (meth)acrylate, methoxypolyethylene glycol (meth)acrylate, methoxypropylene glycol (meth)acrylate, 2-(meth)acryloyloxyethyl-2-hydroxypropyl phthalate, 2-hydroxy-3-phenoxypropyl (meth)acrylate, 2-(meth)acryloyloxyethyl hydrogen phthalate, 2-(meth)acryloyloxypropyl hydrogen phthalate, 2-(meth)acryloyloxypropyl hexahydro hydrogen phthalate, 2-(meth)acryloyloxypropyl tetrahydro hydrogen phthalate, dimethylaminoethyl (meth)acrylate, trifluoroethyl (meth)acrylate, tetrafluoropropyl (meth)acrylate, hexafluoropropyl (meth)acrylate, octafluolopropyl (meth)acrylate, octafluoropropyl (meth)acrylate, adamantly mono(meth)acrylate, and the like; and the like.

The acrylic resin (acrylic polymer) or the like having the monomer unit described above can be prepared by using a polymerization initiator.

Examples of the polymerization initiator include azo compounds such as 2,2'-azobisisobutyronitrile, 2,2'-azobis-(2,4-dimethylvaleronitrile), 2,-azobis-(4-methoxy-2,4-dimethylvaleronitrile), and the like; organic peroxides such as benzoyl peroxide, lauroyl peroxide, tert-butyl peroxypivalate, tert-butylperoxyethyl hexanoate, 1,1'-bis-(tert-butylperoxy)cyclohexane, tert-amylperoxy-2-ethyl hexanoate, tert-hexylperoxy-2-ethyl hexanoate, and the like, hydrogen peroxide; and the like.

When the acrylic resin has the tendency that the resultant cured product has high tensile elastic modulus, the cured product having high elastic modulus can be obtained by enhancing molecular rigidity using a large amount of a monomer with a short aliphatic chain, such as methyl methacrylate or the like, or a monomer having a rigid alicyclic skeleton or aromatic skeleton, such as isobornyl methacrylate, dicyclopentanyl methacrylate, styrene, or the like, or by increasing the crosslinking density using a monomer functioning as a crosslinking agent, such as divinyl benzene, bisphenol A diglycidyl methacrylate, or the like.

On the other hand, when the acrylic resin has the tendency that the resultant cured product has low tensile elastic modulus, the effect of decreasing the elastic modulus in terms of the high-order structural of the cured product can be preferably exhibited by enhancing molecular flexibility using a monomer with a flexible long-chain aliphatic skeleton (including one containing a heteroatom), such as 2-ethylhexyl acrylate, n-butyl acrylate, lauryl acrylate, or the like, or by extending the distance between the crosslink pints of the cured product using a linear (meth)acrylic polymer having a weight-average molecular weight of 100,000 or more.

When the acrylic resin or the like described above is used in the crosslinkable resin composition of the present invention, a crosslinking agent may be contained. The crosslinking agent can exhibit the same performance as the curing agent in (Embodiment 1) and (Embodiment 2) described above, and can be replaced by the other term "curing agent".

Various crosslinking agents can be used as the crosslinking agent and examples thereof include an isocyanate based crosslinking agent, a carbodiimide-based crosslinking agent, an epoxy-based crosslinking agent, a melamine-based crosslinking agent, a peroxide-based crosslinking agent, a urea-based crosslinking agent, a metal alkoxide-based crosslinking agent, a metal chelate-based crosslinking agent, a metal salt-based crosslinking agent, an oxazoline-based crosslinking agent, an aziridine-based crosslinking agent, an amine-based crosslinking agent, and the like. These crosslinking agents can be used alone or in combination of two or more. In addition, the content of the crosslinking agent can be properly determined according to the intended crosslinking degree and is not particularly limited to a specific range.

### <Silicone-based resin (silicone-based polymer)>

The use of the silicone-based resin is used in the crosslinkable resin composition is useful because the cured product has excellent flexibility and sealability. A known usual method can be used as a method for preparing the silicone-based resin.

For example, a silane coupling agent having an alkoxy group represented by formula (1) below can be used for preparing the silicone-based resin (for example, organopolysiloxane).

Si(OR¹)nR²₄₋ₙ (1)

In the formula (1), n represents 2, 3, or 4, R¹ represents an alkyl group, and R² represents an organic group.

Examples of the compound represented by the formula (1) include dialkoxysilane sch as dimethyl dimethoxysilane, dimethyl diethoxysilane, diethyl dimethoxysilane, diethyl diethoxysilane, diphenyl dimethoxysilane, diphenyl diethoxysilane, and the like; trialkoxysilane such as methyl trimethoxysilane, methyl triethoxysilane, ethyl trimethoxysilane, ethyl triethoxysilane, phenyl trimethoxysilane, phenyl triethoxysilane, and the like; tetraalkoysilane such as tetramethoxysilane, tetraethoxysilane, tetraisopropyloxy silane, and the like; (meth)acryloxyalkyl trialkoxysilane such as γ-(meth)acryloxypropyl trimethoxysilane, γ-(meth)acryloxypropyl triethoxysilane, and the like; and the like.

The (meth)acryloxyalkyl trialkoxysilane represents acryloxyalkyl trialkoxysilane or methacryloxyalkyl trialkoxysilane. The same is applied to the (meth)acrylate group and the (meth)acryloxyalkyl group.

Examples of the organopolysiloxane include those represented by formula (2) below.

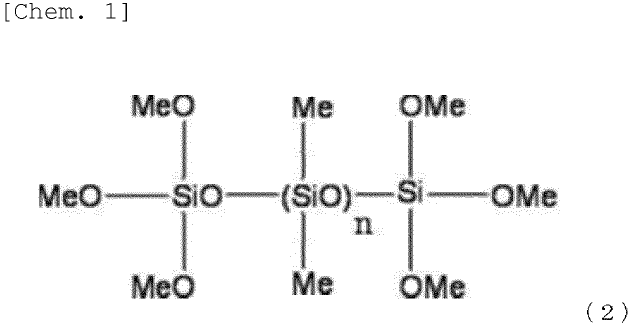

In the formula (2), n can be shown by a numerical value corresponding to the molecular weight of organopolysiloxane.

A compound represented by the formula (2) can be produced by, for example, modifying a polysiloxane having silanol groups at both terminals with tetramethoxysilane.

The organopolysiloxane is preferably a compound represented by the formula (2) or diorganopolysiloxane blocked with the hydrolysis condensate of alkoxysilane. Also, preferred is a methoxysilane-terminated propylene glycol polymer or the like having a main chain modified with methoxysilane having a flexible skeleton or having a terminal modified with aminopropyl trimethoxysilane.

The condensation catalyst which can be used for preparing the silicone-based resin (organopolysiloxane) is not particularly limited as long as it is a catalyst used for condensation of a silanol group or a hydrolyzable silyl group.

Examples of the condensation catalyst include a metal salt; a complex; an alcoholate; an oxide; a multicomponent metal oxide, a slat and/or complex thereof, and combination thereof. The condensation catalyst is preferably a metal salt compound from the viewpoint of excellent room temperature stability and curability.

Also, from the viewpoint of excellent curability and room temperature stability, the condensation catalyst is preferably a metal compound containing at least one selected from the group consisting of Al, Zn, Sn, Zr, Hf, Ti, and lanthanoids, and more preferably a metal salt compound.

Examples of an aluminum compound include aluminum chelates such as tris(acetylacetonato) aluminum, tris(ethylacetoacetate) aluminum, alkylacetoacetate aluminum diisopropylate such as ethylacetoacetate aluminum diisopropylate, aluminum butoxy bisethylacetoacetate, and the like; aluminum salts such as aluminum octylate, a compound containing a cyclic aluminum oxide, aluminum triacetate, aluminum tristearate, and the like; aluminum alcoholates such as aluminum sec-butylate, aluminum triethoxide, aluminum triisopropoxide, alkoxyaryl aluminate, and the like; and the like.

Examples of a zinc compound (metal salt compound of zinc) include carboxylate salts such as zinc aliphatic carboxylates such as zinc acetate, zinc acetylacetate, zinc 2-ethylhexanoate, zinc octylate, zinc neodecanoate, zinc laurate, zinc stearate, and the like, zinc alicyclic carboxylates such as zinc naphthenate and the like, zinc aromatic carboxylates such as zinc benzoate, zinc p-tert-butylbenzoate, zinc salicylate, and the like; zinc chelates such as zinc (meth) acrylate; zinc acetylacetonate [Zn(II) acetylacetonate, Zn(acac)₂], 2,2,6,6-tetramethyl-3,5-heptandionate Zn, and the like; and the like.

From the viewpoint of excellent curability and room temperature stability, a tin compound is preferably a metal salt compound of tetravalent tin such as Dibutyltin diacetate, dibutyltin dioleate, dibutyltin dilaurate, dibutyltin oxyacetate, dibutyltin oxyoctylate, dibutyltin oxylaurate, or the like; a metal salt compound of divalent tin such as tin bis(2-ethylhexanoate) or the like.

A zirconium compound is preferably an aliphatic carboxylate salt and/or alicyclic carboxylate salt, and more preferably an alicyclic carboxylate salt. Examples thereof include aliphatic carboxylate salts such as zirconyl dioctylate, zirconyl dineodecanoate, and the like; alicyclic carboxylate salts such as zirconyl naphthenate, zirconyl cyclohexanoate, and the like; aromatic carboxylate salts such as zirconyl benzoate, and the like.

Examples of a lanthanoid compound include 2-ethylhexanoate salt of lanthanoid, naphthenate salt of lanthanoid, and the like. Among these, from the viewpoint of excellent heating curability of the composition of the present invention, a 2-ethylhexanoate salt of lanthanum, cerium, dysprosium, or ytterbium is preferred, and a 2-ethylhexanoate salt of cerium (cerium (tris(2-ethylhexanoate)) is more preferred.

Examples of a titanium compound include alcoholates such as tetraethoxytitanium, tetraisopropoxytitanium, tetrabutoxytitanium, tetraoctoxytitanium, and the like; titanium metal salt compounds such as diisopropoxytitanium ethyl acetoacetate, diisopropoxytitanium acetylacetonate, and the like; and the like.

When the silicone-based resin has the tendency that the cured product has high tensile elastic modulus, it is considered to enhance molecular rigidity by using a large amount of monomer having a rigid aromatic skeleton, such as phenyl trimethoxysilane, phenyl triethoxysilane, or the like, or increase the crosslinking density by using a large amount of tetrafunctional alkoxysilane such as tetramethoxysilane, tetraethoxysilane, tetraisopropoxysilane, or the like.

On the other hand, when the silicone-based resin has the tendency that the resultant cured product has low tensile elastic modulus, the effect of decreasing the elastic modulus in terms of the high-order structure of the cured product can be preferably exhibited by decreasing the crosslinking density using a large amount of difunctional alkoxysilane such as dimethyl dimethoxysilane, dimethyl diethoxysilane, diethyl dimethoxysilane, diethyl diethoxysilane, or the like, or by extending the distance between the crosslink points of the cured product using methoxysilane-terminated propylene glycol polymer or a linear polymer having a weight-average molecular weight of 100,000 or more.

When the silicone-based resin is used in the crosslinkable resin composition of the present invention, a crosslinking agent may be contained. Various crosslinking agents can be used as the crosslinking agent, and usable examples thereof include a siloxane-based crosslinking agent (silicone-based crosslinking agent) having a hydrosilyl group (SiH group), a peroxide-based crosslinking agent, and the like. These crosslinking agents can be used alone or in combination of two or more. The content of the crosslinking agent can be properly determined according to the intended crosslinking degree and is not limited to a specific range.

### <Other resin>

Besides the epoxy resin, the acrylic resin or the like, the silicone-based resin etc., another resin can be used as the resin component A and the resin component B within a range not impairing the characteristics of the cured product obtained by using the crosslinkable resin composition of the present invention. When the epoxy resin is used as the resin component A or the resin component B, examples of the other resin include thermoplastic resins, such as polyether sulfone and the like, which are known to be dissolved together with the epoxy resin to form a one-phase solution in a low temperature region, but not dissolved together in a high-temperature region; liquid nitrile rubber (CTBN, ATBN, or the like) which has carboxyl groups or amino groups at both terminals and can react with an epoxy group; and the like.

### <Compound C, compound C', and compound C">

In order to cause the reversible bond to be contained (introduced) in the continuous phase, for example, the reversible bond is preferably contained (introduced) in the resin component A, and the reversible bond can be contained (introduced) in the resin component A by reacting the compound C causing the reversible bond and, for example, the compound C' and the compound C" as a plurality of compounds other than the compound C. Consequently, the reversible bond can be contained (introduced) in the continuous phase.

A method for causing the reversible bond to be contained (introduced) in the resin component A by using the compound C includes reacting the compound C, which is a compound already containing the reversive bond in its structure (skeleton) with the resin component A, thereby introducing the reversible bond caused by the compound C directly into the structure (skeleton) of the resin component A.

In addition, a method for causing the reversible bond to be contained (introduced) in the resin component A by reacting the compound C' and the compound C" includes, for example, mixing and reacting the compound C' and the compound C" together with the monomer component and the like and thus reacting with each other the functional groups having reactivity in the compound C' and the component C". Therefore, the reversible bond, produced by reaction between the compound C' and the compound C", is introduced indirectly into the structure (skeleton) of the resin component A formed from the monomer component and the like. An example is that, in the state where the monomer components and the like react (bond) with the compound C' (the precursor is formed), the reactive functional group of the compound C' reacts with the reactive functional group of the precursor, thereby causing the reversible bond to be contained (introduced) in the resin component A.

For example, when the cured product obtained by using the resin component containing the reversible bond introduced as described above is subjected to impact and cracked or crushed, the cured product is easily cut at the reversible bond portion. On the other hand, the reversible bond is useful because a bond is reversibly formed again even in a low-temperature region including room temperature, and the function such as repairability and remoldability can be exhibited, and thus the cured product having excellent low-temperature repairability and low-temperature remoldability can be obtained. For example, even when the cured product having the phase-separated structure having the continuous phase with low elastic modulus and the discontinuous phase with high elastic modulus is crushed, the cured product can be repaired/remolded based on the reversible bond by placing in a low temperature including room temperature or a heating state.

Examples of the reversible bond include a covalent bond type and a non-covalent bond type, and from the viewpoint of durability of the cured product, the covalent bond type is preferred. In particular, from the viewpoint of the shot repairing time and remolding time of the cured product after crashed, the non-covalent bond type is preferred.

Examples of the covalent bond type include, but are not particularly limited to, an addition-type structure formed by Diels-Alder reaction, a disulfide bond, an ester bond, a boronate ester bond, a hindered urea bond, an olefin metathesis reaction, an alkoxyamine skeleton, a diaryl bibenzofuranone skeleton, an amide bond, and the like. Among these, from the viewpoint of hydrolysis resistance of the cured product, an addition-type structure formed by Diels-Alder reaction is preferred.

Examples of the non-covalent bond type include, but are not particularly limited to, Van der Waals force, an ionic bond, a cyclodextrin inclusion bond, hydrogen bonds such as ureide pyrimidinone unit, polyether thiourea, and the like, and the like. Among these, from the viewpoint of the short repairing time and remolding time, the hydrogen bond is preferred.

In order to introduce the reversible bond in the continuous phase, for example, a compound described below (herein, corresponding to the compound C) can be used, and from the viewpoint of hydrolysis-chlorine resistance and acid resistance, an addition-type structure formed by Diels-Alder reaction is preferred.

Examples of a compound having the addition-type structure formed by Diels-Alder reaction include a compound described below.

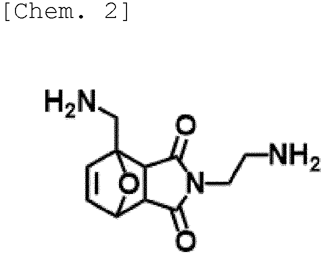

Examples of a compound containing the disulfide bond include compounds described below.

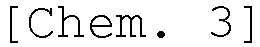

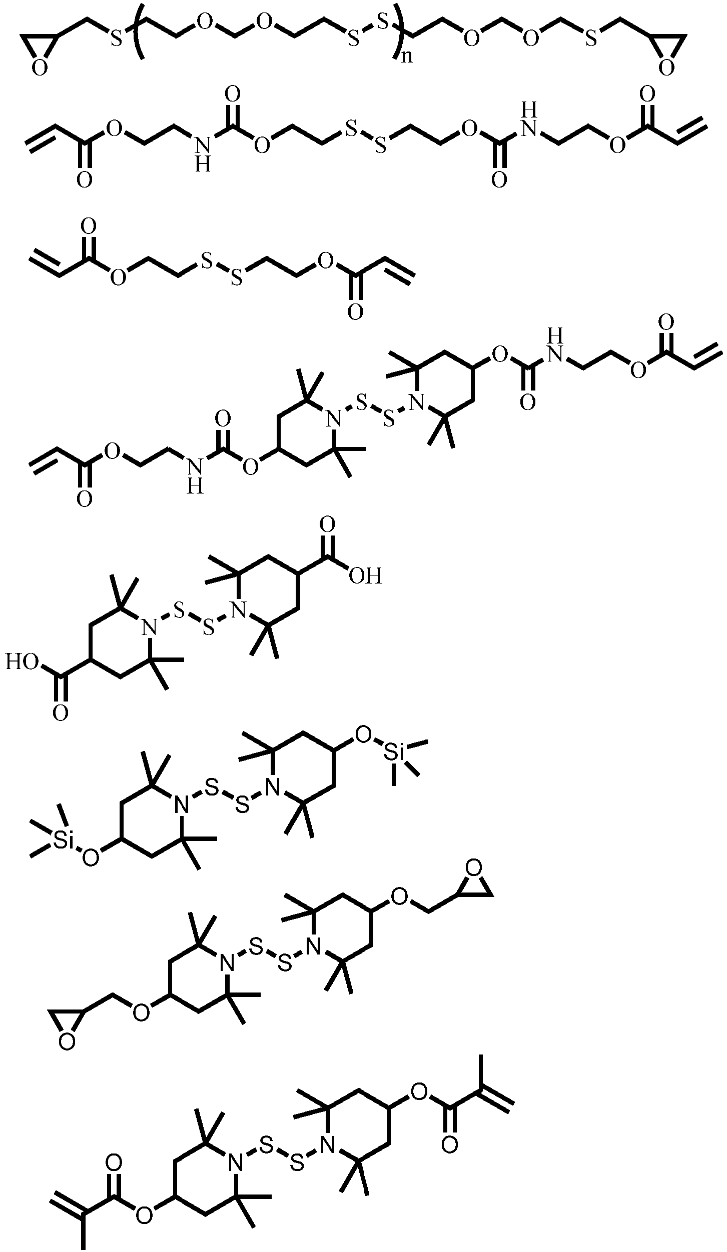

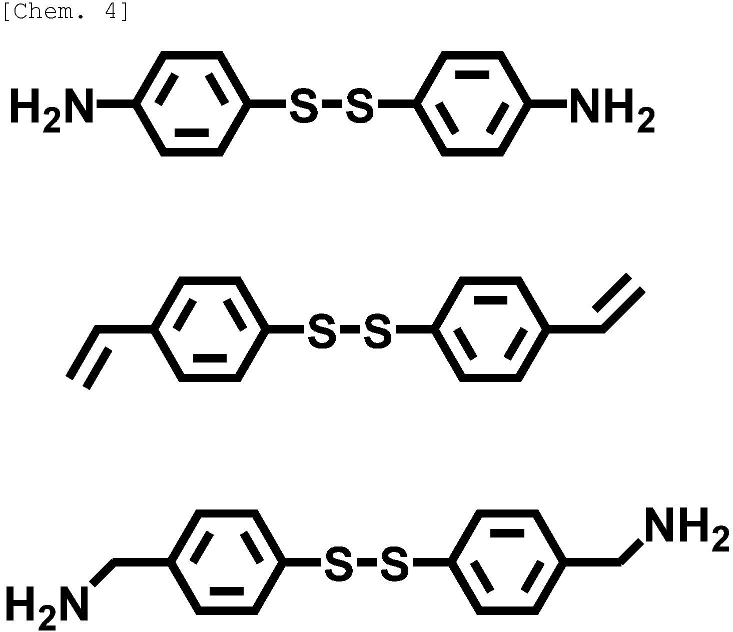

Examples of a compound having the alkoxyamine skeleton include a compound described below.

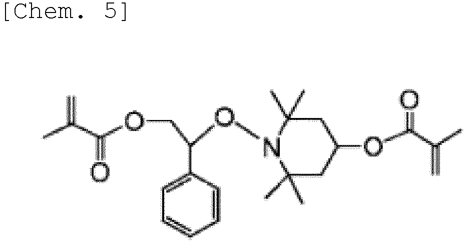

Examples of a compound having the diaryl bibenzofuranone skeleton include a compound described below.

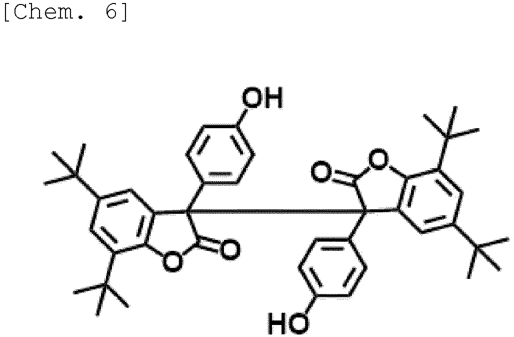

Examples of the compound C' and the compound C" include compounds (precursor compounds) described below, and from the viewpoint of heat resistance, a compound serving as a precursor of Diels-Alder reaction, represented by furans and maleimides, is preferably used.

Examples of a precursor compound of the addition-type structure formed by Diels-Alder reaction include compounds described below.

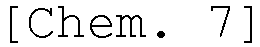

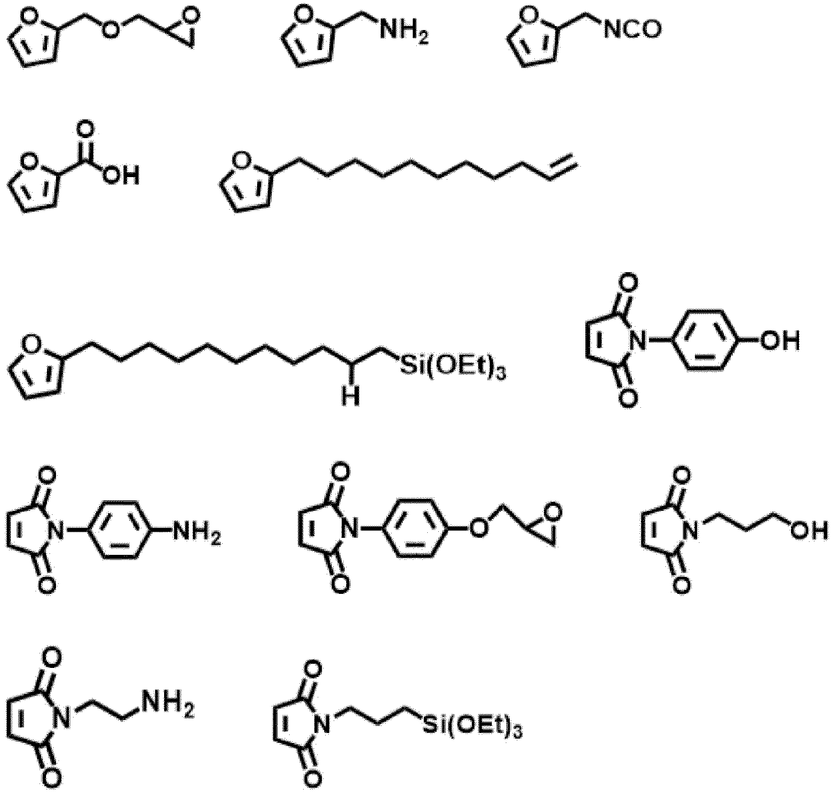

Examples of the precursor compound include a precursor compound forming a hydrogen atom, and an example thereof is described below.

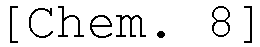

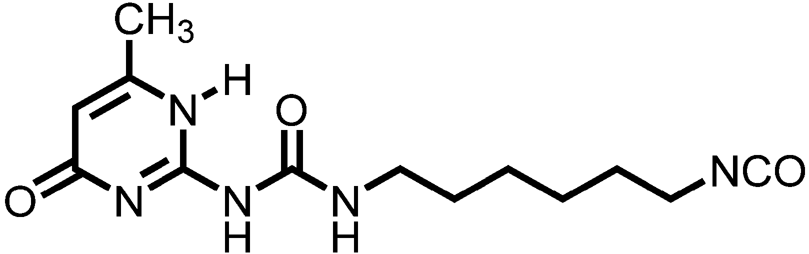

The molar concentration (mmol/g) of the reversible bond in the crosslinkable resin composition of the present invention is preferably 0.10 mmol/g or more relative to the total mass the rein component A, the resin component B, and the compound C (total of the compound C' and the compound C"). This configuration more improves the repairability and remoldability of the crosslinkable resin cured product obtained by heat treatment of the crosslinkable resin composition. The molar concentration of the reversible bond is more preferably 0.10 to 3.00 mmol/g and still more preferably 0.15 to 2.00 mmol/g.

Also, when the crosslinkable resin composition of the present invention contains another combinable resin described above or below, the molar concentration (mmol/g) of the reversible bond in the crosslinkable resin composition of the present invention is preferably 0.10 mmol/g or more, more preferably 0.10 to 3.00 mmol/g, and still more preferably 0.15 to 2.00 mmol/g relative to the total mass including the combinable resin in addition to the rein component A, the resin component B, and the compound C (total of the compound C' and the compound C"). The molar concentration (mmol/g) of the reversible bond can be calculated by formula below. In addition, the number of moles of the reversible bond is the theoretical number of moles. (Molar concentration of reversible bond) (mmol/g) = (number of moles of reversible bond)/(total number of grams of resin component A + resin component B + compound C (or total number of grams of compound C' + compound C")

The molar concentration of the reversible bond can be properly selected by the glass transition temperature (Tg) defined by the tan δ peak top of the cured product, obtained from the intended crosslinkable resin composition, in a dynamic mechanical analyzer (DMA), or the like. For example, when the cured product having a glass transition temperature (Tg) (°C) near room temperature used as a reference is obtained, the sufficient repairability and remoldability can be easily exhibited on the low-molar concentration within a preferred range. On the other hand, when the intended cured product has a glass transition temperature (Tg) exceeding 100°C used as a reference, the function can be easily exhibited even on the high-molar concentration side within a preferred range. However, the glass transition temperature measured by the dynamic mechanical analyzer (DMA) is a temperature at which the dynamic elastic modulus of the cured product is rapidly decreased, and thus the sufficient repairability and remoldability can be easily exhibited even at a low reversible bond concentration within a temperature range exceeding this temperature. Therefore, the effect of exhibiting repairability and remoldability can be adjusted by properly adjusting the aging temperature for repairing and the heating temperature for remolding, and the relation between the glass transition temperature of the cured product and the molar concentration of the reversible bond is not limited to the above.

### <Filler>

The crosslinkable resin composition of the present invention may further contain a filler. Examples of the filler include an inorganic filler and an organic filler. Examples of the inorganic filer include inorganic fine particles.

Examples of the inorganic fine particles include alumina, magnesia, titania, zirconia, silica (quartz, fumed silica, precipitated silica, silicic anhydride, fused silica, crystalline silica, super-fine amorphous silica, and the like), and the like; those having excellent thermal conductivity, such as boron nitride, aluminum nitride, aluminum oxide, titanium oxide, magnesium oxide, zinc oxide, silicon oxide, diamond, and the like; those having excellent electric conductivity, such as a metal filler and/or a metal-coated filler using an elemental metal or alloy (for example, iron, copper, magnesium, aluminum, gold, silver, platinum, zinc, manganese, stainless, or the like); those having excellent barrier properties, such as minerals such as mica, clay, kaolin, talc, zeolite, wollastonite, smectite, and the like, potassium titanate, magnesium sulfate, sepiolite, xonotlite, aluminum borate, calcium carbonate, titanium oxide, barium sulfate, zinc oxide, and magnesium hydroxide; those having a high refractive index, such as barium titanate, zirconia oxide, titanium oxide, and the like; those showing photocatalyst properties, such as photocatalyst metals such as titanium, cerium, zinc, copper, aluminum, tin, indium, phosphorus, carbon, sulfur, tellurium, nickel, iron, cobalt, silver, molybdenum, strontium, chromium, barium, lead, and the like, composites and oxides of these metals, and the like; those having excellent abrasion resistance, such as metals such as silica, alumina, zirconia, magnesium oxide, and the like, composites and oxides thereof, and the like; those having excellent electric conductivity, such as metals such as silver, copper, and the like, tin oxide, indium oxide, and the like; those having excellent insulation such as silica and the like; and those having excellent ultraviolet shielding, such as titanium oxide, zinc oxide, and the like.

These types of inorganic fine particles may be properly selected according to application, and may be used alone or in combination of a plurality of types. Also, the inorganic fine particles have various characteristics other than the characteristics described above and thus may be properly selected according to application.

For example, when silica is used for the inorganic fine particles, it is not particularly limited, and known silica fine particles, such as powdery silica, colloidal silica, or the like, can be used. Examples of commercial powdery silica fine particles include Aerosil 50 and 200 manufactured by Nippon Aerosil Co., Sildex H31, H32, H51, H52, H121, and H122 manufactured by Asahi Glass Co., Ltd., E220A and E220 manufactured by Nippon Silica Kogyo Co., Ltd., SYLYSIA 470 manufactured by Fuji Silysia Chemical Ltd., SG flake manufactured by Nippon Sheet Glass Co., Ltd., and the like. Examples of commercial colloidal silica include methanol silica sol, IPA-ST, MEK-ST, NBA-ST, XBA-ST, DMAC-ST, ST-UP, ST-OUP, ST-20, ST-40, ST-C, ST-N, ST-O, ST-50, ST-OL, and the like manufactured by Nissan Chemical Industries, Ltd.

Also, surface-modified silica fine particles may be used, and examples thereof include the silica fine particles described above, which are surface-treated with a reactive silane coupling agent having a hydrophobic group or modified with a compound having a (meth)acryloyl group. Examples of commercial powdery silica modified with a compound having a (meth)acryloyl group include Aerosil RM50, R711, and the like manufactured by Nippon Aerosil Co., and examples of commercial colloidal silica modified with a compound having a (meth)acryloyl group include MIBK-SD and the like manufactured by Nissan Chemical Industries, Ltd.

Usable examples of the shape of the silica fine particles include, but are not particularly limited to, a spherical shape, a hollow shape, a porous phase, a rod-like shape, a plate-like shape, a fibrous shape, and an irregular shape. Also, the primary particle diameter is preferably within a range of 5 to 200 nm. The diameter of less than 5 nm causes insufficient dispersion of the inorganic fine particles in a dispersion, while the diameter exceeding 200 nm may fail to maintain the sufficient mechanical strength of the cured product.

Not only an extender pigment but also an ultraviolet responsive photocatalyst can be used as the titanium oxide fine particles, and usable examples thereof include anatase-type titanium oxide, rutile-type titanium oxide, and brookite-type titanium oxide, and the like. Further, particles designed so as to response to visible light by doping the crystal structure of titanium oxide with a heteroatom can also be used. The element used for doping titanium oxide is preferably anion element such as nitrogen, sulfur, carbon, fluorine, phosphorus, or the like, or cation element such as chromium, iron, cobalt, manganese, or the like. Also, a powder or a sol or slurry prepared by dispersing in an organic solvent or water can be used as the form. Examples of commercial powdery titanium oxide fine particles include Aerosil P-25 manufactured by Nippon Aerosil Co., ATM-100 manufactured by Tayca Corporation, and the like. Examples of commercial slurry titanium oxide fine particles include TKD-701 manufactured by Tayca Corporation, and the like.

### <Fibrous substrate>

The crosslinkable resin composition of the present invention may contain a fibrous substrate. The fibrous substrate of the present invention is not particularly limited, but is preferably a substrate used for a fiber-reinforced resin, and inorganic fibers or organic fibers can be used.

Examples of the inorganic fibers include inorganic fibers such as carbon fibers, glass fibers, boron fibers, alumina fibers, silicon carbide fibers, and the like, and carbon fibers, activated carbon fibers, graphite fibers, glass fibers, tungsten carbide fibers, silicon carbide fibers (silicon carbide fibers), ceramics fibers, alumina fibers, natural fibers, mineral fibers such as basalt, and the like, boron fibers, boron nitride fibers, boron carbide fibers, metal fibers, and the like. Examples of the metal fibers include aluminum fibers, copper fibers, brass fibers, stainless fibers, and steel fibers.

Examples of the organic fibers include synthetic fibers composed of resin materials such as polybenzazole, aramid, PBO (polyparaphenylene benzoxazole), polyphenylene sulfide, polyester, acryl, polyamide, polyolefin, polyvinyl alcohol, polyarylate, and the like, natural fibers such as cellulose, pulp, cotton, wool, silk, and the like, regenerated fibers such as protein, polypeptide, alginic acid, and the like, and the like.

Among these, the fibrous substrate is preferably carbon fibers or glass fibers because of a wide industrial use range. These may be used alone or a plurality of types may be simultaneously used.

The fibrous substrate of the present invention may be a fiber assembly, and the fibers may be continuous or discontinuous and may have a woven fabric form or a nonwoven fabric form. Also, the fibers may be aligned in a direction to form a fiber bundle, and the fiber bundles may be aligned to form a sheet. Also, the fiber assembly may be given thickness to form a three-dimensional shape.

### <Dispersion medium>

The crosslinkable resin composition of the present invention may use a dispersion medium for the purpose of adjusting the solid content and viscosity of the crosslinkable resin composition. The dispersion medium may be a liquid medium which does not impairing the effect of the present invention, and examples thereof include various organic solvents, liquid organic polymers, and the like.

Examples of organic solvents include ketones such as acetone, methyl ethyl ketone (MEK), methyl isobutyl ketone (MIBK), and the like, cyclic ethers such as tetrahydrofuran (THF), dioxolane, and the like, esters such as methyl acetate, ethyl acetate, butyl acetate, and the like, aromatics such as toluene, xylene, and the like, and alcohols such as carbitol, cellosolve, methanol, isopropanol, butanol, propylene glycol monomethyl ether, and the like. These can be used alone or in combination, and among these, methyl ethyl ketone is preferred in view of volatility and solvent recovery during coating.

The liquid organic polymer is a liquid organic polymer not directly contributing to curing reaction, and examples thereof include carboxyl group-containing polymer modified products (Florene G-900 and NC-500: Kyoeisha Chemical Co., Ltd.), acrylic polymers (Florene WK-20: Kyoeisha Chemical Co., Ltd.), amine salts of special modified phosphorate esters (HIPLAAD ED-251: Kusumoto Chemicals, Ltd.), modified acrylic block copolymers (DISPERBYK 2000; BYK-Chemie), and the like.

### <Resin>

The crosslinkable resin composition of the present invention may contain a resin other than the various resins and compounds described above. A known usual resin may be mixed as long as it does not impair the effect of the present invention, and for example, a thermosetting resin and a thermoplastic resin can be used.

The thermosetting resin is a resin having the characteristic that it can be changed to be substantially insoluble and infusible when cured by a method of heating, radiation, or a catalyst, or the like. Specific examples thereof include a phenol resin, a urea resin, a melamine resin, a benzoguanamine resin, an alkyd resin, an unsaturated polyester resin, a vinyl ester resin, a diallyl terephthalate resin, a silicone resin, a urethane resin, a furan resin, a ketone resin, a xylylene resin, a thermosetting polyimide resin, a benzoxazine resin, an active ester resin, an aniline resin, a cyanate ester resin, a styrene-maleic anhydride (SMA) resin, a maleimide resin, and the like. These thermosetting resins can be used alone or in combination of two or more.

The thermoplastic resin represents a resin which can be melt-molded by heating. Specific examples thereof include a polyethylene resin, a polypropylene resin, a polystyrene resin, a rubber-modified polystyrene resin, an acrylonitrile-butadiene-styrene (ABS) resin, an acrylonitrile-styrene (AS) resin, a polymethyl methacrylate resin, an acrylic resin, a polyvinyl chloride resin, a polyvinylidene chloride resin, a polyethylene terephthalate resin, an ethylene vinyl alcohol resin, a cellulose acetate resin, an aionomer resin, a polyacrylonitrile resin, a polyamide resin, a polyacetal resin, a polybutylene terephthalate resin, a polylactic acid resin, a polyphenylene ether resin, a modified polyphenylene ether resin, a polycarbonate resin, a polysulfone resin, a polyphenylene sulfide resin, a polyether imide resin, a polyether sulfone resin, a polyarylate resin, a thermoplastic polyimide resin, a polyamide-imide resin, a polyether ether ketone resin, a polyketone resin, a liquid crystal polyester resin, a fluorine resin, a syndiotactic polystyrene resin, a cyclic polyolefin resin, and the like. These thermoplastic resins can be used alone or in combination of two or more.

### <Other compound>

The crosslinkable resin composition of the present invention may contain other compounds. Examples thereof include a catalyst other than those described above, a polymerization initiator, an inorganic pigment, an organic pigment, an extender pigment, a clay mineral, wax, a surfactant, a stabilizer, a flow modifier, a coupling agent, a dye, a leveling agent, a rheology control agent, an ultraviolet absorber, an antioxidant, a flame retardant, a plasticizer, a reactive diluent, and the like.

In the crosslinkable resin composition of the present invention, the difference in tensile elastic modulus between the discontinuous phase and the continuous phase is preferably 1000 MPa or more, more preferably 1500 MPa or more, and still more preferably 2000 MPa or more. Having the difference in tensile elastic modulus is useful because an attempt can be made to satisfy both mechanical strength and flexibility.

In the crosslinkable resin composition of the present invention, the tensile elastic modulus of the continuous phase is preferably less than 1000 MPa, more preferably 0.1 MPa to 500 MPa, and still more preferably 0.1 MPa to 100 MPa. The continuous phase having the tensile elastic modulus within the range described above preferably enhances the repairing effect.

In the crosslinkable resin composition of the present invention, the tensile elastic modulus of the discontinuous phase is preferably 1500 MPa to 6000 MPa, more preferably 2000 MPa to 5000 MPa, and still more preferably 2000 MPa to 4000 MPa. The discontinuous phase having the tensile elastic modulus within the range described above preferably increases the thermal deformation temperature.

The crosslinkable resin composition of the present invention is preferably a composition for a repairing/remolding material. When the cured product is formed, the crosslinkable resin composition forms a phase-separated structure, and can exhibit mechanical strength due to the discontinuous phase having high elastic modulus. On the other hand, the reversible bond is introduced into the continuous phase, and thus molecular mobility is improved even in a low-temperature region including room temperature, thereby imparting flexibility. Thus, even when crack occurs in the cured product, repairability and remoldability can be exhibited. Therefore, the composition of the present invention is useful as a composition for a repairing/remolding material.

### <Cured product>

The present invention relates to the cured product obtained by curing the crosslinkable resin composition. The cured product is charactered in that it has the phase-separated structure formed by the continuous phase (sea portion) and the discontinuous phase (island portion), the continuous phase (sea portion) has lower tensile elastic modulus than the discontinuous phase (island portion), and the phase-separated structure is formed in association with the progress of curing of the crosslinkable resin composition. The cured product having the structure described above is useful because mechanical strength can be exhibited by the discontinuous phase having a high elastic modulus, while the reversible bond is introduced into the continuous phase having a low elastic modulus, thereby improving molecular mobility and imparting flexibility even in a low-temperature region. Therefore, repairability and remoldability can be exhibited even when cracks or the like occur in the cured product, and it is possible to contribute to the prolongation of the life of the cured product and a decrease in waste.

When the crosslinkable resin composition is cured, curing may be performed at room temperature or by heating. Curing may be performed by using a known usual curing catalyst. In heat curing, curing may be performed by one time of heating or curing may be performed through a multistage heating step.

Also, the crosslinkable resin composition of the present invention can be cured by active energy rays. In the case, a photocationic polymerization initiator may be used as a polymerization initiator. Usable examples of the active energy rays include visible light, ultraviolet light, X-rays, electron beams, and the like.

In addition, the cured product has the phase-separated structure (sea-island structure) formed by the continuous phase (sea portion) and the discontinuous phase (island portion), and from the viewpoint of mechanical strength, the content ratio (area fraction: %) of continuous phase (sea portion) : discontinuous phase (island portion) is preferably 70:30 to 30:70, and more preferably 60:40 to 40:60. The range described above is useful because of excellent balance between repairability and remoldability and mechanical strength.

Also, from the viewpoint of heat resistance, the content ratio (area fraction: %) of continuous phase (sea portion) : discontinuous phase (island portion is preferably 60:40 to 10:90, and more preferably 50:50 to 10:90. The range described above is useful because of excellent balance between repairability and remoldability and heat resistance.

Also, from the viewpoint of giving priority to repairability and remoldability, the content ratio (area fraction: %) of continuous phase (sea portion) : discontinuous phase (island portion is preferably 90:10 to 50:50, and more preferably 90:10 to 60:40. The range described above is useful because of excellent repairability and remoldability.

A method for adjusting within the range includes adjusting the mixing ratio between the resin component A, the resin component B, and the compound C, adjusting the difference in curing rate between the resin component A and the resin component B, adjusting the difference in viscosity between the resin component A and the resin component B, adjusting compatibility between the resin component A and the resin component B, and using various conditions generally used for adjusting a phase-separated structure, such as change of the during rate, the mixing order of the resin components, selection of a catalyst species, utilization of a crystalline material, utilization of a difference in crystallization rate, or the like.

In addition, the content ratio (area fraction: %) between the continuous phase (sea portion) and the discontinuous phase (island portion) can be calculated by image processing of a SEM photograph (the area fraction (%) can be calculated by image processing using image analysis-type particle size distribution analysis software Mac-View Ver. 4.0).

### (Application of crosslinkable resin composition and cured product)

The cured product obtained by using the crosslinkable resin composition of the present invention can satisfy all the heat resistance, flexibility, and mechanical strength and further has excellent repairability and remoldability, and thus can be used for various applications and, specifically, useful for applications described below.

### <Laminate>

The present invention relates to a laminate having a substrate and a layer containing the cured product. The substrate of the laminate may be properly used according to application, and examples thereof include inorganic materials such as a metal, glass, and the like, organic materials such as plastic and wood, and the like. The shape may be a laminate, a flat plate, a sheet shape, a shape having a three-dimensional structure, or a three-dimensional shape. The shape may be a shape having a curvature in the entire surface or a portion or the like, and may be any shape according to purpose. Also, the hardness, thickness, and the like of the cured product are not limited. In addition, the cured product of the present invention may be further laminated on the cured product of the present invention used as a substrate.

In the laminate, the layer (cured product layer) containing the cured product may be formed directly on the substrate by coating or molding, or the previously molded layer may be laminated. In direct coating examples of a coating method include, but are not particularly limited to, a spray method, a spin coating method, a dipping method, a roll coating method, a blade coating method, a doctor roll method, a doctor blade method, a curtain coating method, a slit coating method, a screen printing method, an ink jet method, and the like. Examples of direct molding include in-mold molding, insert molding, vacuum molding, extrusion laminate molding, press molding, and the like. When a molded composition is laminated, an uncured or semi-cured composition layer may be laminated and then cured, or a cured layer produced by completely curing the composition may be laminated on the substrate. Alternatively, the laminate may be formed by coating and curing a precursor serving as the substrate on the layer (cured product layer) containing the cured product or bonding and then curing a precursor serving as the substrate or the crosslinkable resin composition of the present invention in an uncured or semi-cured state. The precursor serving as the substrate is not particularly limited, and various curable resin compositions and the like can be used.

### <Primer>

The cured product obtained by using the crosslinkable resin composition of the present invention has particularly high adhesion to a metal and/or a metal oxide due to combination of the continuous phase rich in flexibility and the discontinuous phase with high mechanical strength and thus can be particularly preferably used as a primer for a metal. Examples of a metal include copper, aluminum, gold, silver, platinum, chromium, nickel, tin, titanium, zinc, various alloys, composite materials thereof, and examples of a metal oxide include single metal oxides and/or composite metal oxides of these metals, and the like. In particular, the cured product can be preferably used as an adhesive for iron, copper, and aluminum because of excellent adhesive force to iron, copper, and aluminum.

### <Adhesive>

Also, the cured product obtained by using the crosslinkable resin composition of the present invention has the continuous phase rich in flexibility and thus can relieve stress, and thus can be particularly preferably used for bonding different materials. For example, even when the cured product is used for bonding between different materials, such as between a metal and a nonmetal, high adhesion can be maintained without being influenced by a change in temperature environment, and thus peeling little occurs. Examples of application in which the cured product can be preferably used include an adhesive for structural members in the fields of automobile, electric train, civil engineering and construction, electronics, aircraft, and space industry. Also, besides application to structural members, the adhesive can be used as an adhesive for general office works, medical treatment, carbon fibers, storage cattery cells, modules, and cases, and the like. Further the adhesive can be used as an adhesive for joining optical components, an adhesive for bonding an optical disk, an adhesive for amounting a printed circuit board, a die bonding adhesive, an adhesive for a semiconductor such as an underfill or the like, an underfill for BGA reinforcement, an adhesive for mounting an anisotropic conductive film, an anisotropic conductive paste, or the like.

### <Fiber reinforced resin>

When the crosslinkable resin composition of the present invention contains a fibrous substrate, and the fibrous substrate is reinforced fibers, the crosslinkable resin composition containing the fibrous substrate can be used as a fiber-reinforced resin. A method for causing the fibrous substrate to be contained in the crosslinkable resin compost is not particularly limited within a range not impairing the effect of the present invention, and examples thereof include a method for making the fibrous substrate and the crosslinkable resin composition composite by a method of kneading, coating, impregnation, injection, pressure bonding, or the like, and the method can be properly selected according to the form of fibers and application of the fiber-reinforced resin.

A method for molding the fiber-reinforced resin is not particularly limited. When a plate-shaped product is produced, an extrusion molding method is general, but molding can also be performed by plane pressing. Other usable examples thereof include an extrusion molding method, a blow molding method, a compression molding method, a vacuum molding method, an injection molding method, and the like. When a film-shaped product is produced, a melt extrusion method and a solution cast method can be used, and when a melt molding method is used, inflation film molding, cast molding, extrusion lamination molding, calendar molding, sheet molding, fiber molding, blow molding, injection molding, rotational molding, coating molding, or the like can be used. Also, when the resin is cured by active energy rays, the cured product can be produced by various curing methods using active energy rays. In particular, when a thermosetting resin is a main component of a matrix resin, a molding method of pressure-heating a prepreg of a molding material using a press or an autoclave can be used. Other examples include RTM (Resin Transfer Molding) molding, VaRTM (Vacuum assist Resin Transfer Molding) molding, lamination molding, hand lay-up molding, and the like.

### <Other molding material>

The cured product obtained by using the crosslinkable resin composition of the present invention, particularly the cored product using an epoxy resin, has excellent heat resistance and can exhibit repairability and remoldability, and thus can be used for a casting material for a large case and a case inside, and for a molding material for a gear, a pulley, and the like. The cured product may be a cured product of only the fibers or a cured product fiber-reinforced with glass chips or the like.

### <Heat-resistant material and electronic material>

The cured product (particularly, the cored product using an epoxy resin) obtained by using the crosslinkable resin composition of the present invention has excellent heat resistance, flexibility, mechanical strength, and repairability and remoldability, and thus can also be used as a heat-resistant material and an electronic material. In particular, the cured product can be preferably used for a semiconductor sealing material, a semiconductor device, a prepreg, a printed circuit board, a flexible substrate, a build-up film, a build-up substrate, a conductive paste, an adhesive, a resist material, and the like. Also, the cured product can be preferably used for a matrix resin of the fiber-reinforced resin, and is particularly suitable as a high-heat-resistant prepreg.

Also, the cured product obtained by using the crosslinkable resin composition can be preferably used as a heat-resistant member and an electronic member in various applications, and examples thereof include, but are not particularly limited to, an industrial machine component, a general machine component, components of automobile/railway, vehicle, and the like, space/aircraft-related components, electronic/electric components, a construction material, a container/package material, housewares, sport/leisure goods, casing members for wind power generation and the like. When the resin component having excellent heat resistance, such as an epoxy resin or the like, is used, the cured product is particularly useful as a heat-resistant member.

Typical products of the heat-resistant material and electronic material described above are described below by giving specific examples.

### 1. Semiconductor sealing material

A method for obtaining a semiconductor sealing material from the crosslinkable resin composition of the present invention is, for example, a method of sufficiently melt-mixing the crosslinkable resin composition, a curing accelerator, and a compounded agent such as an inorganic filler or the like, if required, using an extruder, a kneader, a roll, or the like until the mixture becomes uniform. In this method, fused silica is generally used as the inorganic filler, but when the cured product is used as a high-thermal conductive semiconductor sealing material for a power transistor or power IC, crystalline silica with higher thermal conductivity than fused silica, alumina, silicon nitride or the like for a higher filling rate, or fused silica, crystalline silica, alumina, silicon nitride, or the like may be used. With respect to the filling rate, the inorganic filler is preferably used within a range of 30 to 95 parts by mass relative to 100 parts by mass of the crosslinkable resin composition. In particular, in order to improve flame retardancy, moisture resistance, and solder crack resistance and decreasing the linear expansion coefficient, 70 parts by mass or more is preferred, and 80 parts by mass or more is more preferred.

### 2. Semiconductor device

A method of semiconductor package molding for obtaining a semiconductor device from the crosslinkable resin composition of the present invention includes, for example, casting or molding the semiconductor sealing material using a transfer molding machine or an injection molding machine, and further heating at 50°C to 250°C for 2 to 10 hours.

### 3. Prepreg

The fiber-reinforced resin can form a state referred to as an uncured or semi-cured prepreg. A product in the state of prepreg may be distributed and then finally cured to form the cured product. When the laminate is formed, the laminate including the layers closely adhering to each other can be preferably formed by forming the prepreg and then laminating another layer and then finally curing them. In this case, the mass ratio between the composition and fibrous substrate used is particularly not limited, but is preferably adjusted so that the resin content in the prepreg is generally 20% to 60% by mass.

### 4. Printed circuit board

A method for producing a printed circuit board from the crosslinkable resin composition of the present invention is, for example, a method including laminating the prepreg by a general method, properly superposing a copper foil, and then heat press-bonding at 170°C to 300°C under a pressure of 1 to 10 MPa for 10 minutes to 3 hours.

### 5. Flexible substrate

A method for producing a flexible substrate from the crosslinkable resin composition of the present invention is, for example, a production method including three steps described below. A first step is a step of coating the crosslinkable resin composition containing the resin components, the organic solvent etc. on an electrical insulation film by using a coater such as a reverse roll coater, a comma coater, or the like; a second step is a step of evaporating the solvent from the electrical insulation film by heating the electrical insulation film coated with the crosslinkable resin composition using a heater at 60°C 170°C for 1 to 15 minutes, to convert the crosslinkable resin composition to a B-stage; and a third step is a step of heat pressure-bonding a metal foil to the adhesive of the electrical insulation film having the B-stage crosslinkable resin composition using a heating roller or the like (preferably, pressure-bonding pressure: 2 to 200 N/cm, pressure-bonding temperature: 40°C to 200°C). When satisfactory bonding performance can be obtained through the three steps, the method may be finished, but when complete bonding performance is required, post-curing is preferably further performed under the conditions of 100°C to 200°C for 1 to 24 hours. The thickness of the resin composition layer after being finally cured is preferably within a range of 5 to 100 µm.

### 6. Build-up substrate

A method for producing a build-up substrate from the crosslinkable resin composition of the present invention includes, for example, steps described below. In a first step (step 1), the crosslinkable resin composition appropriately containing rubber, a filler, etc. is coated on a circuit board having a circuit formed thereon by using a spray coating method, a curtain coating method, or the like, and then cured. In a next step (step 2), if required, a hole is punched in a predetermined through hole portion or the like, then the surface is treated with a roughening agent and washed with hot water to form irregularities and then plated with a metal such as copper or the like. In a next step (step 3), these operations are repeated in order according to demand to alternately form and build-up the resin insulating layer and a conductor layer of a predetermined circuit pattern. In addition, the hole is punched in the through hole portion after the resin insulating layer is formed as the outermost layer. When the build-up substrate of the present invention is formed by heat pressure-bonding, at 170°C to 300°C, a copper foil with a resin, which is produced by semi-curing the resin composition on a copper foil, on a wiring board with a circuit formed thereon, the build-up substrate can be formed without the step of roughening the surface and plating treatment.

### 7. Buil-up film

A build-up film can be produced by a method for producing a build-up film from the crosslinkable resin composition of the present invention, including coating the crosslinkable resin composition on the surface of a support film serving as a substrate and further drying the organic solvent by heating, spraying hot air, or the like to form a layer of the crosslinkable resin composition.

Preferred usable examples of the organic solvent used include ketones such as acetone, methyl ethyl ketone, cyclohexane, and the like, acetate esters such as ethyl acetate, butyl acetate, cellosolve acetate, propylene glycol monomethyl ether acetate, carbitol acetate, and the like, carbitols such as cellosolve, butyl carbitol, and the like, aromatic hydrocarbons such as toluene, xylene, and the like, dimethyl formamide, dimethyl acetamide, N-methyl pyrrolidone, and the like. In addition, the organic solvent is preferably used at a ratio such as the non-volatile content is 30% to 60% by mass.

The thickness of the formed layer of the crosslinkable resin is generally equal to or larger than the thickness of the conductive layer. The thickness of the conductive layer possessed by a circuit board is generally within a range of 5 to 70 µm, and thus the layer of the crosslinkable resin composition preferably has a thickness of 10 to 100 µm. In addition, the layer of the crosslinkable resin composition may be protected with a protective film described later. The protection with the protective film can prevent the adhesion of dust or the like to the resin composition layer surface and cracking thereon.

Examples of the support film and the protective film include polyolefins such as polyethylene, polypropylene, polyvinyl chloride, and the like, polyesters such as polyethylene terephthalate (may be abbreviated as "PET" hereinafter), polyethylene naphthalate, and the like, polycarbonate, polyimide, release paper, metal foils such as a copper foil, an aluminum foil, and the like, and the like. The support film and the protective film may be subjected to matte treatment, corona treatment, or release treatment, The thickness of the support film is not particularly limited, bur is generally 10 to 150 µm and preferably within a range of 25 to 50 µm. The thickness of the protective film is preferably 1 to 40 µm,

The support film is separated after lamination on the circuit board or the insulating layer is formed by heat curing. When the support film is separated after the layer of the crosslinkable resin composition constituting the build-up film is heat-cured, the adhesion of dust or the like in the curing step can be prevented. When the support film is separated after curing, the support film is generally previously subjected to release treatment.

A multilayer printed circuit board can be produced by using the build-up film obtained as described above. For example, when the layer of the crosslinkable resin composition is protected by the protective film, the film is separated, and then the layer of the crosslinkable resin composition is laminated on one surface or both surfaces of the circuit board by, for example, a vacuum lamination method, so as to be in direct contact with the circuit board. The lamination method may be a batch type or a continuous type using a roller. Also, if required, the build-up film and the circuit board may be heated (preheating) as occasion demand before lamination. The lamination conditions include a preferred pressure bonding temperature (lamination temperature) of 70°C to 140°C, and a preferred pressure bonding pressure of 1 to 11 kgf/cm² (9.8 × 10⁴ to 107.9 × 10⁴ N/m²), and lamination is preferably performed under reduced pressure of 20 mmHg (26.7 hPa) or less in terms of air pressure.

### 8. Conductive paste

A method for producing a conductive paste from the crosslinkable resin composition of the present invention is, for example, a method of dispersing conductive particles in the crosslinkable resin composition. The conductive paste can be used for a paste resin composition for circuit connection and an anisotropic conductive adhesive according to the type of the conductive particles used.

### 9. Other

The methods for producing the semiconductor sealing material etc. are described above, but another cured product can be produced from the crosslinkable resin composition. The other cured product can be produced by a method according to a method for curing a general crosslinkable resin composition. For example, the heating temperature condition may be properly selected according to the type of the curing agent combined, application, and the like.

### EXAMPLES

Next, the present invention is specifically described by giving examples and comparative examples, but in description below, "parts" and "%" are on mass basis unless otherwise specified.

¹H-NMR, FD-MS spectra, and GPC were measured under conditions below.

¹H-NMR: "JNM-ECA600" manufactured by JEOL RESONANCE
Magnetic field strength: 600 MHz
Number of times of integration: 32
Solvent: DMSO-d6
Sample concentration: 30% by mass

FD-MS: "JMS-T100GC AccuTOF" manufactured by JEOL Ltd.
Measurement range: m/z = 50.00 to 2000.00
Rate of change: 25.6 mA/min
Final current value: 40 mA
Cathode voltage: -10 kV

GPC: "HLC-8320GPC" manufactured by Tosoh Corporation
Column: "TSK-GEL G2000HXL" + "TSK-GEL G3000HXL" + "TSK-GEL G4000HXL" manufactured by Tosoh Corporation
Detector: RI (differential refractometer)
Measurement condition: 40°C
Moving phase: Tetrahydrofuran
Flow rate: 1 ml/min
Standard: "PStQuick A", "PStQuick B", "PStQuick E", "PStQuick F" manufactured by Tosoh Corporation

With respect to the epoxy equivalent of the epoxy resin synthesized, measurement was performed according to JIS K7236, and the epoxy equivalent (g/eq) was calculated.

An example of a method for calculating the number of repeating units includes calculation from the results of GPC molecular weight measurement and various proper instrumental analyses of FD-MS, NMR, and the like.

### [SYNTHESIS EXAMPLE 1]

In a flask equipped with a thermometer ad a stirrer, 210 g (0.5 moles) of 1,12-dodecanediol diglycidyl ether (manufactured by Yokkaichi Chemical Co., Ltd.: epoxy equivalent: 210 g/eq) and 119.7 g (0.53 moles) of bisphenol A (hydroxyl equivalent: 114 g/eq) were charged and heated to 140°C over 30 minutes, and then 3.2 g of a 20% aqueous sodium hydroxide solution was charged. Then, the resultant mixture was heated to 150°C over 30 minutes, and further reacted at 150°C for 16 hours. Then, a neutralization amount of sodium phosphate was added to obtain 320 g of hydroxyl compound (Ph-1).

The hydroxyl compound (Ph-1) was measured by mass spectrometry (FD-MS spectrometry) and represented by structural formula (b-1) below. In the structural formula (b-1), a peak at M+ = 771 corresponding to the theoretical structure with m = 1 and n = 12 was obtained, and thus it was confirmed that a hydroxyl compound having a structure represented by the structural formula (b-1) is contained.

The hydroxyl equivalent of the hydroxyl compound (Ph-1) calculated from ¹H-NMR and GPC was 2000 g/eq, and the average value of m in the structural formula (b-1) calculated from the hydroxyl equivalent was 6.9.

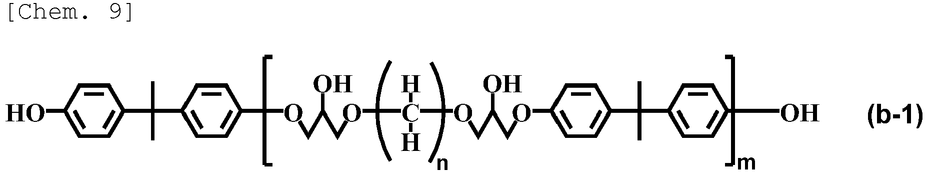

### [SYNTHESIS EXAMPLE 2]

In a flask equipped with a thermometer, a dropping funnel, a condenser, and a stirrer, 200 g of the hydroxyl compound (Ph-1) obtained in Synthesis Example 1, 437 g (4.72 moles) of epichlorohydrin, and 118 g of n-butanol were charged and dissolved. The resultant solution was heated to 65°C, and the pressure was reduced to azeotropic pressure, and then 6.66 g (0.08 moles) of a 49% aqueous sodium hydroxide solution was dropped over 5 hours. Then, stirring was continued under the same conditions for 0.5 hours. During the stirring, the distillate distilled by azeotrope was separated by Dean-Stark trap, a water layer was removed, and reaction was performed while an oil layer was returned to the reaction system. Then, unreacted epichlorohydrin was distilled off by vacuum distillation. Then, the obtained crude epoxy resin was dissolved.by adding 150 g of methyl isobutyl ketone and 150 g of n-butanol. Further, 10 g of a 10% aqueous sodium hydroxide solution was added to the resultant solution and reacted at 80°C for 2 hours, and then water washing with 50 g of water was repeated 3 times until the pH of the washing solution was made neutral. Then, the inside of the system was dehydrated by azeotrope, and the solvent was distilled off under reduced pressure after passing through microfiltration, producing 190 g of epoxy resin (Ep-1).

The epoxy equivalent of the epoxy resin (Ep-1) was 2320 g/eq.

The epoxy resin (Ep-1) was measured by mass spectrometry and represented by structural formula (A-1) below. In the structural formula (A-1), a peak at M+ = 883 corresponding to the theoretical structure with m = 1, n = 12, p1 = 0, p2 = 0, and q = 1 was obtained, and thus it was confirmed that the epoxy resin (Ep-1) having a structure represented by the structural formula (A-1) is contained.

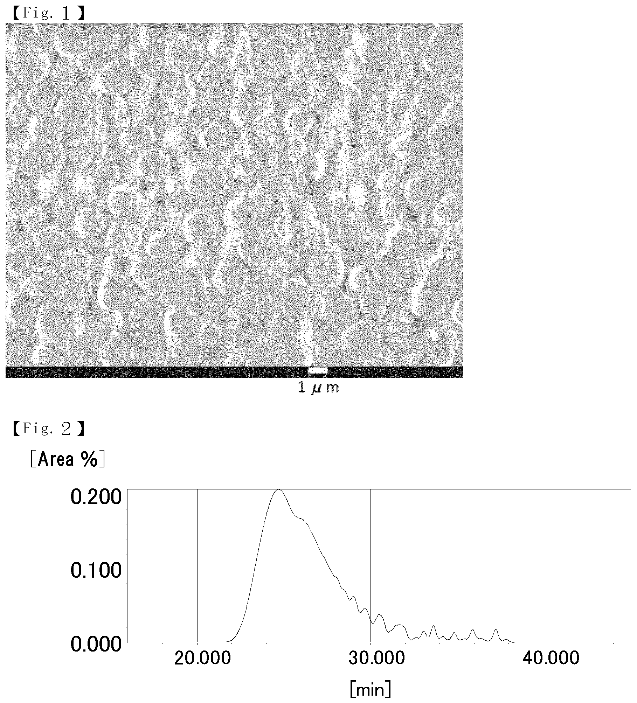

The epoxy resin (Ep-1) contains a compound with q = 0 in the structural formula (A-1), it was confirmed by GPC (refer to Fig. 2) that the compound with q = 0 is contained at a ratio of 0.7% by mass, and the average value of m in the structural formula (A-1) is 8.0.

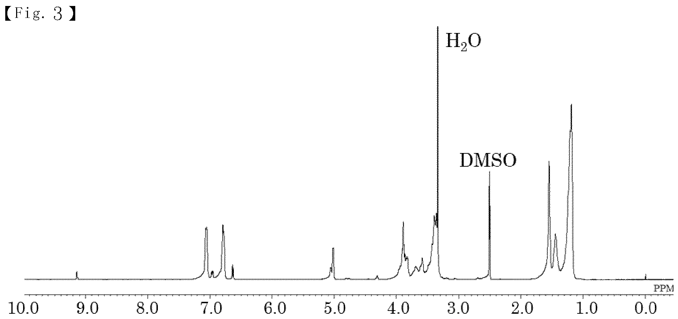

Also, in a ¹H-NMR spectrum (refer to Fig. 3), peaks derived from a dodecane chain was shown near 1.19 and 1.44 ppm, a peak derived from an isopropylidene bond contained in the bisphenol A structure was shown near 1.55 ppm, a peak derived from an epoxy group was shown at 2.69 to 2.82 ppm, a peak derived from an aliphatic hydroxyl group was shown near 5.02 ppm, and a peak derived from an aromatic ring was shown at 6.80 to 7.06 ppm. Thus, it was confirmed that the epoxy resin (Ep-1) having a structure represented by the structural formula (A-1) is contained.

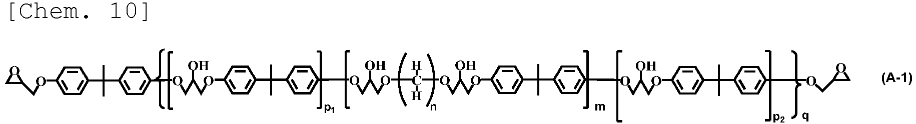

### [SYNTHESIS EXAMPLE 3]

A Diels-Alder reaction adduct (Diamine DA Adduct Cross-Linker) was obtained according to a synthesis method described in "J. Polym. Sci., Part A: Polym. Chem., 53, 2094 (2015)". In a mass spectrum, a peak at M+ = 237 was obtained, and thus a structure was confirmed.

A specific synthesis method included preparing the maleimidation product of N-Boc-ethylenediamine and maleic anhydride in an acetic acid solvent according to a usual method and Boc-protected furfurylamine. Then, Diels-Alder reaction of these materials was allowed to proceed in ethyl acetate at room temperature for 24 hours. The resultant Diels-Alder reaction adduct (10.0 g, 22.9 mmol) was first dissolved in dichloromethane (100 mL) at 0°C, and then trifluoroacetic acid (40 mL) was added and stirred for 3 hours. During stirring, the solution was reached to room temperature. The resultant mixture was concentrated and washed 4 times with diethyl ether (30 mL). The remaining solvent was evaporated, and then the resultant white powder was dissolved in 30 mL of methanol. The methanol solution was changed to light yellow by several times of flashing of an ion exchange resin. The resultant solution was filtered with alkali alumina and dried with anhydrous sodium sulfate. The solvent was evaporated at 35°C under reduced pressure, producing Diamine DA Adduct Cross-Linker (4.3 g, 80%) as a brown viscous liquid.

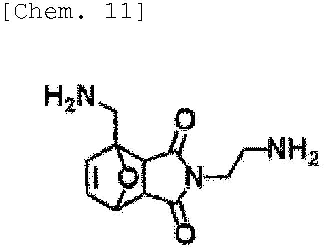

### [SYNTHESIS EXAMPLE 4]

In a reactor provided with a stirrer, a reflux condenser, a nitrogen inlet tube, and a thermometer, 400 pars by mass of n-butyl acrylate, 200 parts by mass of ethyl acrylate, 200 parts by mass of acrylonitrile, 40 parts by mass of glycidyl methacrylate, 160 parts by mass of furfuryl methacrylate, and 1000 parts by mass of ethyl acetate were charged, and heated to 70°C under stirring while nitrogen was blown in. One hour after, 10 parts by mass (solid content of 5%) of a 2,2'-azobis(2-methylbutyronitrile) solution previously prepared by dissolving in ethyl acetate was added. Then, the resultant mixture was held at 70°C for 8 hours under stirring and then heated to 150°C, and ethyl acetate was distilled off under reduced pressure. The contents were cooled to obtain an acrylic polymer (AP-1) having a weight-average molecular weight of 800,000.

### [SYNTHESIS EXAMPLE 5]

First, 4-hydroxyphenylmaleimide (4-HPM) was synthesized using 4-aminophenol as a raw material according to the method described in "Polymer Vol. 37, No. 16, 3721-3727: 1996". A peak at M+ = 189 was obtained in a mass spectrum, and thus a structure was confirmed.

A specific synthesis method included charging 76.5 g (0.78 mol) of maleic anhydride and 1.8 L of toluene in a 3-L flask provided with a thermometer, a condenser, a Dean-Stark trap, and a stirrer, and stirring the mixture at room temperature. Next, a mixed solution of 38.7 g (0.35 mol) of 4-aminophenol and 200 mL of DMF was dropped over 1 hour. After the completion of dropping, reaction was further performed at room temperature for 2 hours. Then, 9.82 g of p-toluene sulfonic acid monohydrate was added, and water and toluene azeotroped by heating the reaction solution under reflux were cooled and separated, and only toluene was returned into the system, followed by dehydration reaction for 8 hours. After cooling with air to room temperature, the reaction solution was reprecipitated with distilled water, and the precipitated reaction product was filtered off and washed by applying water. The reaction product was vacuum-dried at 80°C for 4 hours, obtaining 50 g of 4-hydroxyphenyl maleimide (4-HPM).

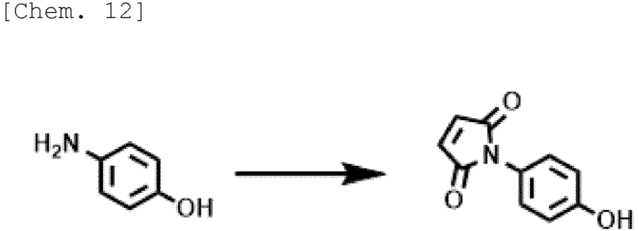

### [SYNTHESIS EXAMPLE 6]

First, N-(propyltriethoxysilane)maleimide (TESiM) was synthesized according to the synthesis method described "Nucleosides, Nucleotides and Nucleic Acids" (24, 1076-1077 (2005)". A peak at M+ = 301 was obtained in a mass spectrum, and thus a structure was confirmed.

A specific synthesis method included mixing N-propyltriethoxysilane with maleic anhydride in dichloromethane as a solvent, producing N-(propyltriethoxysilane) maleic acid as an intermediate (reaction time of about 1 hour). Then, the solvent used was removed to isolate a white crystal as the product.

Then, in order to form a maleimide ring in N-(propyltriethoxysilane) maleic acid, N-(propyltriethoxysilane) maleic acid was mixed with zinc chloride and hexamethyldisilazane and then reacted by heating to 80°C, producing N-(propyltriethoxysilane) maleimide (TESiM).

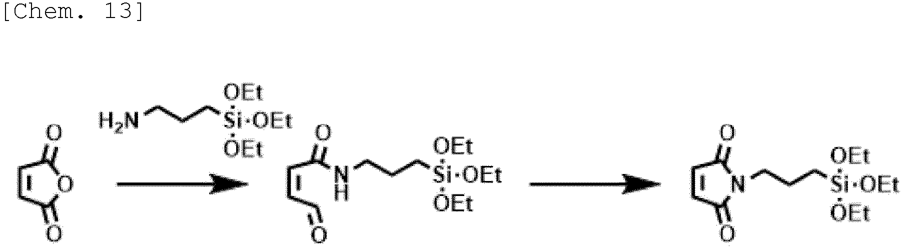

### [EXAMPLES 1 to 3 and COMPARATIVE EXAMPLES 1 and 2]

### [Preparation of crosslinkable resin composition and cured product]

A resin such as an epoxy resin or the like, a curing agent, and a curing accelerator were uniformly mixed by using a mixer ("Awatori Rentaro ARV-200" manufactured by Thinky Corporation) to prepare a mixture according to Table 1 and Table 2, thereby obtaining a crosslinkable resin composition.

The resultant crosslinkable resin composition was held between aluminum mirror-surface plates ("JIS H 4000 A1050P" manufactured by Engineering Test Service Co., Ltd.) using a silicon tube as a spacer, and curing reaction was performed under the curing conditions and aging conditions described in Table 1 and Table 2, producing a cured product with a thickness of 4 mm for thermal deformation temperature measurement and a cured product with a thickness of 0.8 mm for evaluation of repairability.

**[Table 1]**

| | | Example 1 | Example 2 | Comparative Example 1 | Comparative Example 2 |
|---|---|---|---|---|---|
| Epoxy resin | Ep-1 | 46 | - | 99 | - |
| | EPICLON850S | 46 | 46 | - | 90 |
| Acrylic polymer | AP-1 | | 46 | | |
| Curing agent | Diamine DA Adduct Cross-linker | 3 | - | 3 | 3 |
| | 4-HPM | - | 8 | - | - |
| | DICY | 5 | - | 1 | 10 |
| | DDM | | 11 | | |
| Curing accelerator | DCMU | 8.5 | - | 8.5 | 8.5 |
| Curing condition | Temperature (°C) | 160 | 120 | 160 | 160 |
| | Time | 3 hours | 1 hour | 3 hours | 3 hours |
| Aging condition | Temperature (°C) | 60 | 60 | 60 | 60 |
| | Time | 12 hours | 12 hours | 12 hours | 12 hours |

**[Table 2]**

| | | Example 3 |
|---|---|---|
| Mixture of epoxy resin and tin compound (catalyst) | EP-001(main agent) | 47 |
| Maleimide compound | TESiM | 4 |
| Furan compound | Furfuryl glycidyl ether | 2 |
| Mixture of modified silicone resin and tertiary amine (catalyst) | EP-001(curing agent) | 47 |
| Curing condition | Temperature (°C) | 23 |
| | Time | 1 week |
| Aging condition | Temperature | - |
| | Time | 24 hours |

The materials used in the tables are as follows.
EPICLON 850S: bisphenol A type epoxy resin (manufactured by DIC Corporation, epoxy equivalent: 188 g/eq)
Furfuryl glycidyl ether: (manufactured by Kanto Chemical Co., Inc.)
EP-001 (main agent): epoxy-modified silicone-based reaction induction phase-separated type two-component adhesive (manufactured by Cemedine Co., Ltd.), an epoxy resin composition containing a bisphenol A type epoxy resin as a main component mixed with a tin compound as a curing catalyst for a silicone resin)
EP-001 (curing agent): curing agent (manufactured by Cemedine Co., Ltd.), a mixture of EP-001 (main agent) (modified silicone resin) and a tertiary amine as a curing catalyst for an epoxy resin
DICY: dicyandiamide (manufactured by Mitsubishi Chemical Corporation, "DICY7")
DDM: diaminodiphenylmethane (manufactured by Kanto Chemical Co., Inc.)
DCMU: 3-(3,4-dichlorophenyl)-1,1-dimethylurea (manufactured by DIC Corporation, "B-605-IM")

(1) In Example 1 and Compratieve Example 1, an epoxy resin (Ep-1) and Diamine DA Adduct Cross-Linker were previously mixed at 50°C for 24 hours and then used. A schematic drawing of a reaction path in Example 1 is shown below. 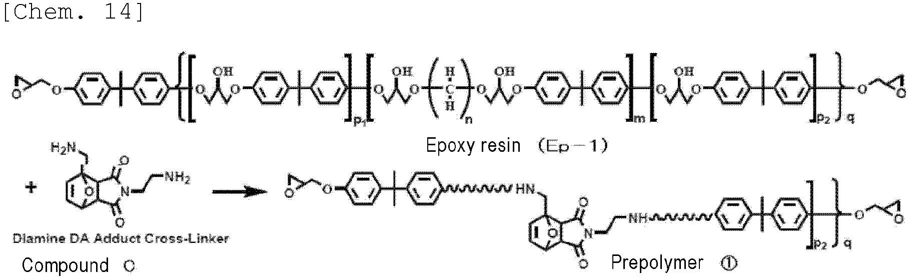 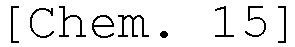 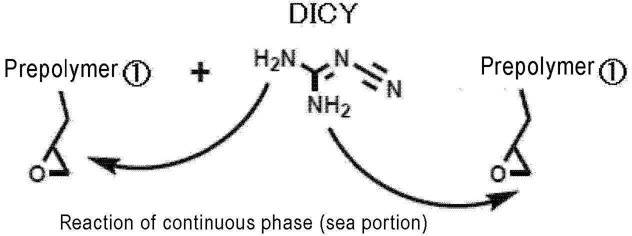 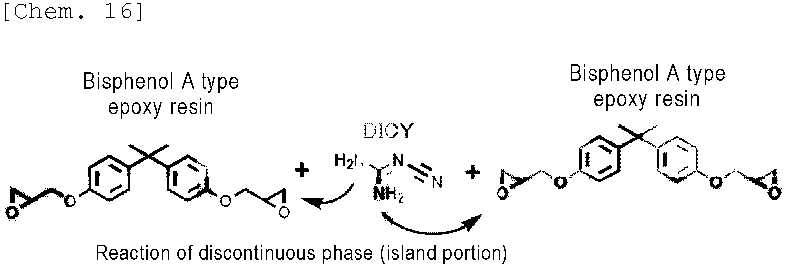 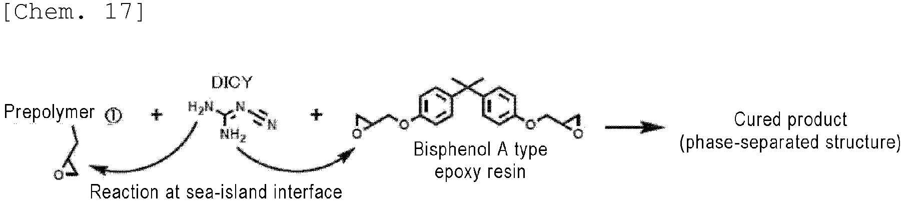
(2) In Example 2, acrylic polymer (AP-1) and 4-HPM were previously mixed at 50°C for 24 hours and then used. A schematic drawing of a reaction path in Example 2 is shown below. 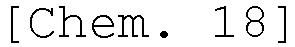 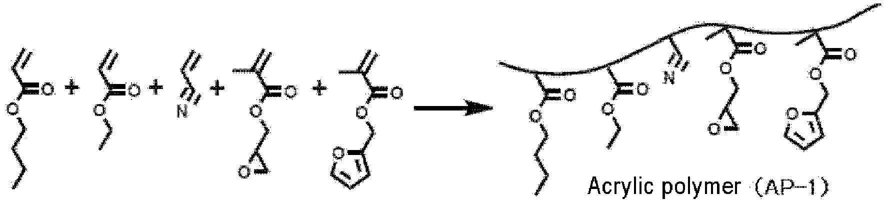 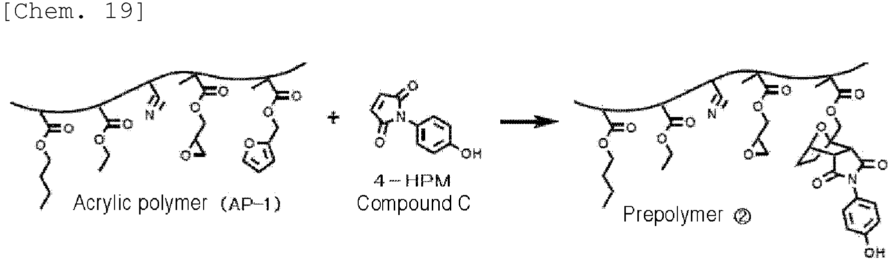 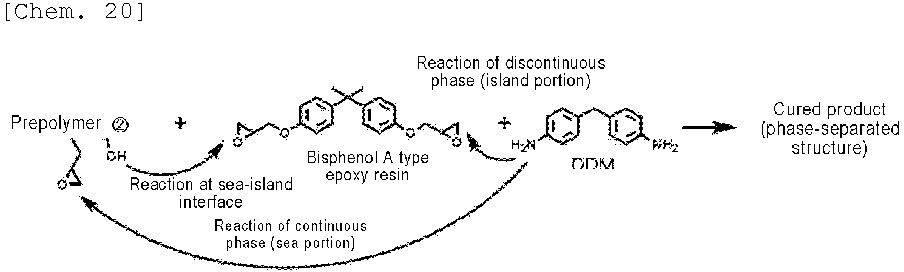
(3) In Example 3, TESiM and furfuryl glycidyl ether were previously mixed at 50°C for 24 hours and then used. A schematic drawing of a reaction path in Example 3 s shown below. 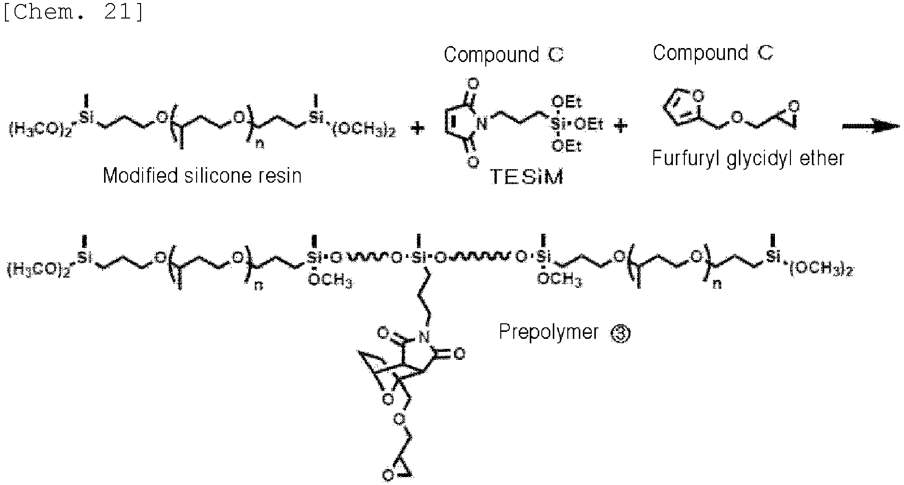 The reaction product of the TESiM and furfuryl glycidyl ether has the function (containing a reversible bond) corresponding the compound C. 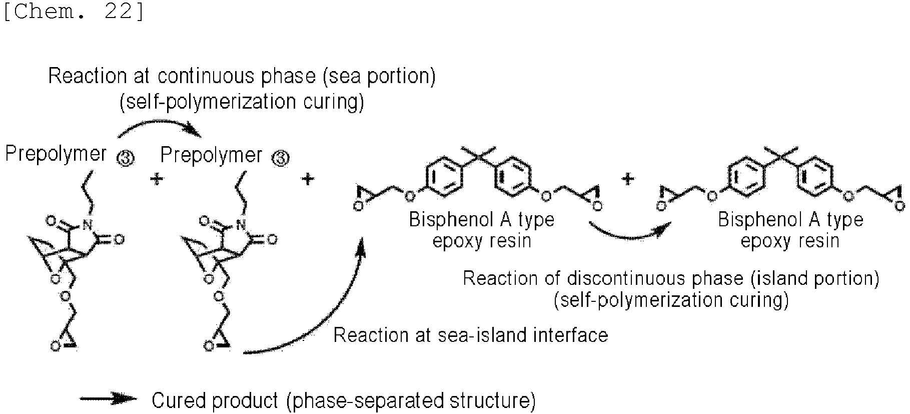
(4) In Comparative Example 2, EPICLON 850S and Diamine DA Adduct Cross-Linker were previously mixed at 50°C for 24 hours and then used.

### <Tensile test.

The resin cured product was punched out in a dumbbell shape (JIS K 7161-2-1BA) using a punching blade, forming a test piece. The test piece was measured by using a tensile tester ("Autograph AG-IS" manufactured by Shimadzu Corporation) according to JIS K 7162-2, and maximum point stress (MPa), maximum point strain rate (%), and tensile elastic modulus (MPa) of the test piece in a measurement environment of 23°C were evaluated (teat speed: 2 mm/min).

### <Thermal deformation temperature>

A cured product of 80 mm × 10 mm × 4 mm in thickness was used for measurement. The measurement was carried out flatwise according to JIS K7191-1, 2:2015. Specifically, the thermal deformation temperature (°C) was measured by using a HDT tester "Auto-HDT3D-2" (manufactured by Toyo Seiki Seisaku-Sho Ltd.) under the conditions in which the distance between fulcrums was 64 mm, the loads were 1.80 MPa (high load) and 0.45 MPa (low load), and the heating rate was 120 °C/hour.

### <Evaluation of repairability>

Each of the cured product before remolding (initial value) and the product produced by grinding the cured product and then remolding (conditions: 60°C and 24 hours, but only in Example 3, 10°C and 24 hours) was punched out in a dumbbell shape (JIS K 7161-2-1BA) using a punching blade, forming a test piece. The test piece was measured by using a tensile tester ("Autograph AG-IS" manufactured by Shimadzu Corporation) according to JIS K 7162-2, and maximum point stress (MPa) and maximum point strain rate (%) of the test piece in a measurement environment of 23°C were evaluated (teat speed: 2 mm/min). The repair rate of maximum point stress (%) and the repair rate of maximum point strain (%) were calculated by "value of remolded product/initial value × 100".

### <Observation of phase-separated structure>

A section of the resultant cured product was formed by an ultramicrotome, and the phase-separated structure was observed. A specific observation method used a scanning electron microscope (SEM) (for example, refer to Fig. 1 of Example 1).

The presence of the phase-separated structure in the cured product can be confirmed by SEM observation, and when the structure formed a sea-island structure, the average particle diameter (µm) of the island portion (discontinuous phase) was measured. With respect to the average particle diameter, 50 island portions (discontinuous phase) were randomly selected from the island portions (discontinuous phase) present in a viewing field of 200 µm × 260 µm, and the average particle diameter was determined (In Example 1, the domain average particle diameter of the island portions was 1.2 µm, and the area fraction (%) of the island portions can be calculated from image processing using an image analysis type particle size distribution measurement software MAC-View Ver. 4.0. The result of calculation from image processing was 47%.).

### <SEM>

Type of apparatus used: JSM-7800F manufactured by JEOL Ltd.

### Acceleration voltage: 5 kV

**[Table 3]**

| | | Resin component or the like | Tensile elastic modulus (MPa) |
|---|---|---|---|
| Example 1 | Discontinuous phase (island portion) | EPICLON 850S+DICY | 3740 |
| | Continuous phase (sea portion) | Ep-1+DICY | 1 |
| Example 2 | Discontinuous phase (island portion) | EPICLON 850S+DDM | 3550 |
| | Continuous phase (sea portion) | Ap-1 alone | 10 |
| Example 3 | Discontinuous phase (island portion) | EP-001(main agent)+ tertiary amine | 4020 |
| | Continuous phase (sea portion) | EP-001(curing agent)+ tin compound | 0.5 |

**[Table 4]**

| | | | Example 1 | Example 2 | Example 3 | Comparative Example 1 | Comparative Example 2 |
|---|---|---|---|---|---|---|---|
| Molar concentration of reversible bond (mmol/g) | | | 0.12 | 0.40 | 0.13 | 0.12 | 0.12 |
| Presence of phase-separated structure in cured product | | | Yes | Yes | Yes | No | No |
| Thermal deformation temperature | (°C) | | 145 | 130 | 40 | 10 | 150 |
| Tensile test | Maximum point stress (MPa) | Initial | 20 | 17 | 7 | Less than 1 | 30 |
| | | After repair | 40 | 35 | 13 | Less than 1 | 2 |
| | Maximum point strain rate (%) | Initial | 100 | 420 | 180 | 400 | 1 |
| | | After repair | 95 | 400 | 160 | 50 | Less than 1 |
| Repair rate of elongation (60°C×24 hours press molding) | Repair rate of maximum point stress (%) | | 200 | 206 | - | Evaluation impossible | 7 |
| | Repair rate of maximum point strain rate (%) | | 95 | 95 | - | 10 | Evaluation impossible |
| Repair rate of elongation (10°C×24 hours press molding) | Repair rate of maximum point stress (%) | | - | - | 186 | - | - |
| | Repair rate of maximum point strain rate (%) | | - | - | 89 | - | - |

!t could be confirmed from the evaluation results of Tables 3 and 4 that in the examples, a cured product having a phase-separated structure can be obtained by curing the crosslinkable resin composition under the condition within a range of room temperature (23°C) to high temperature (160°C), and the excellent function can be exhibited for heat resistance (thermal deformation temperature), mechanical strength (tensile characteristic), and repair rate. In Example 3, the thermal deformation temperature tends to be lower as compared with Example 1 etc., but in Example 3, the thermal deformation temperature is increased as compared with when the silicone resin used in Example 3 is used as a base before introduction of the reversible bond, and thus it could be confirmed that the heat resistance is excellent.

On the other hand, in the comparative examples, the desired phase-separated structure was not formed in the cured product, and even when a compound corresponding to the compound C was used, the function of reversible bond was not sufficiently exhibited. Thus, any one of the heat resistance (thermal deformation temperature) and mechanical strength (tensile characteristic) was low or low such that it could not be evaluated and, in comparison with the examples, a cured product simultaneously satisfying the heat resistance, mechanical strength, repairability, and remoldability could not be obtained.

### Industrial Applicability

A cured product obtained by using a crosslinkable resin composition of the present invention improves the mechanical strength of the whole of the cured product due to a discontinuous phase with high elastic modulus, and the cured product contains a reversible bond and thus a continuous phase with low elastic modulus improves molecular mobility even in a low-temperature region including room temperature and imparts flexibility. Even when a crack occurs in the cured product, repairability and remoldability can be exhibited, thereby enabling to contribute to prolongation of the life of the cured product itself and a decrease in waste. Therefore, the cured product can be preferably used for, for example, an adhesive for a structural member, a fiber composite material, a semiconductor sealing material, a prepreg, a printed circuit board, a flexible substrate, a build-up film, a build-up substrate, a conductive paste, an adhesive, a resist material, and the like.

## Claims

1. A crosslinkable resin composition that can form a cured product having a phase-separated structure formed by a continuous phase and a discontinuous phase,
wherein the discontinuous phase has higher tensile elastic modulus than the continuous phase; and
the continuous phase contains a reversible bond.

2. The crosslinkable resin composition according to claim 1,
wherein the continuous phase contains the reaction product of a resin component A containing the reversible bond with a curing agent;
the discontinuous phase contains the reaction product of a resin component B with a curing agent; and
the phase-separated structure contains the reaction product of the continuous phase and the discontinuous phase with the curing agent.

3. The crosslinkable resin composition according to claim 1,
wherein the continuous phase contains the reaction product of the resin component A containing the reversible bond with a curing agent and/or the self-polymerization product of the resin component A containing the reversible bond;
the discontinuous phase contains the reaction product of the resin component B with a curing agent and/or the self-polymerization product of the resin component B;
a functional group (a1) in the continuous phase has reactivity with a functional group (b1) in the discontinuous phase; and
the phase-separated structure contains the reaction product of the functional group (a1) in the continuous phase and the functional group (b1) in the discontinuous phase.

4. The crosslinkable resin composition according to any one of claims 1 to 3, wherein the difference in tensile elastic modulus between the discontinuous phase and the continuous phase is 1000 MPa or more.

5. The crosslinkable resin composition according to claim 4, wherein the tensile elastic modulus of the continuous phase is less than 1000 MPa.

6. The crosslinkable resin composition according to any one of claims 1 to 3, wherein the crosslinkable resin composition is a composition for a repairing/remolding material.

7. A cured product comprising the crosslinkable resin composition according to any one of claims 1 to 3, which is cured.

8. A laminate comprising a substrate and a layer containing the cured product according to claim 7.

9. A heat-resistant member comprising the cured product according to claim 7.
